# EUROPÄISCHE PATENTANMELDUNG

(11) **EP 2 014 740 A1**
(43) Veröffentlichungstag der Anmeldung: **14.01.2009**
(21) Anmeldenummer: 07011837.7
(22) Anmeldetag: 16.06.2007
(51) Int. Cl.: C09K 21/02, B32B 17/06, C01B 33/32, E06B 5/16, B05C 9/14

(54) **Brandschutzmittel**

(71) Anmelder: Scheuten Glasgroep B.V., 5900 AA Venlo (NL)
(72) Erfinder: Villari, Valentino Dr., 41063 Mönchengladbach (DE)
(74) Vertreter: Jostarndt, Hans-Dieter

(57) **Zusammenfassung**

Die vorliegende Erfindung betrifft ein Brandschutzmittel mit hervorragenden Brandschutzeigenschaften und die Verwendung dieses Brandschutzmittels zur Herstellung einer Brandschutzverglasung.

Das Brandschutzmittel zeichnet sich dadurch aus, dass es mindestens ein intumeszierendes Material umfasst, wobei es ausgehend von einer Lösung, deren Gehalt an Glycerin unter 6 Gew-% liegt, hergestellt wird.

Das Brandschutzmittel zeichnet sich ferner dadurch aus, dass es als flächige Folie ausgebildet ist, deren durchschnittliche Dicke eine Toleranz zwischen 1% und 30% aufweist.

## Beschreibung

Die vorliegende Erfindung betrifft ein Brandschutzmittel hervorragenden Brandschutzeigenschaften und die Verwendung dieser Brandschutzmittels zur Herstellung einer Brandschutzverglasung.

Es ist zur Herstellung von Brandschutzverglasungen aus verschiedenen Patentschriften bekannt, so genannte intumeszierende Materialien als Brandschutzmittel innerhalb einer Brandschutzverglasung einzusetzen.

Aus den Druckschriften DE 35 30 968 und DE 195 25 263 sind zum Beispiel Hydrogele, welche Wasser, Polymere und Salze umfassen, bekannt. Diese Hydrogele werden als intumeszierende Materialien in Brandschutzschichten verwendet.

Zudem ist beispielsweise aus den Druckschriften DE 28 15 900, DE 27 52 543, DE 35 09 249, EP 0 492 977 und WO 96/03854 die Verwendung von Wassergläsern als intumeszierende Materialien bekannt.

Diese intumeszierenden Materialien bilden zum Beispiel innerhalb einer Verglasungseinheit mit wenigstens zwei Glasscheiben eine transparente als Brandschutzmittel dienende Schicht, welche meistens zwischen den Glasscheiben angeordnet ist und im Brandfall aufblähen kann.

Intumeszierende Materialien im Sinne der vorliegenden Erfindung können dabei im Brandfall eine erhebliche Energiemenge der auftretenden Hitze zum Beispiel vorzugsweise durch das im Material enthaltene Wasser aufnehmen. Dadurch kann dieses Wasser zum Kochen und/oder zum Verdampfen gebracht werden, wobei sich eine schaumartige Schicht bildet, die als Isolation gegen die auftretende Hitze dienen kann. Bevorzugterweise umfassen intumeszierende Materialien im Sinne der vorliegenden Anmeldung vorzugsweise mindestens ein Wasserglas und/oder mindestens ein Hydrogel.

Des Weiteren sind aus verschiedenen Druckschriften Herstellungsverfahren für Brandschutzmittel aus einem intumeszierenden Material bekannt.

Aus der Druckschrift DE 44 35 843 ist beispielsweise ein Aufgussverfahren zur Herstellung eines Brandschutzmittels aus einem intumeszierenden Material bekannt, bei dem eine wässerige Lösung eines intumeszierenden Materials auf eine waagerecht liegende Glasplatte gegossen wird. Dabei wird zuvor ein aus Kitt geformter Ablaufschutzrand auf der Glasplatte angebracht. Der Großteil des Wassers der wässerigen Lösung des intumeszierenden Materials wird durch einen Trocknungsprozess entfernt, sodass das intumeszierende Material auf der Glasplatte ein festes Brandschutzmittel bildet.

Jedoch weisen solche Aufgussverfahren verschiedene Nachteile auf. Damit bei solchen Aufgussverfahren eine homogene Zusammensetzung und Dicke des Brandschutzmittels erreicht werden kann, muss zur Herstellung jedes einzelnen Brandschutzmittels immer wieder eine absolut perfekte gegebenenfalls waagerechte Lage jeder einzelnen verwendeten Glasplatte beziehungsweise Unterlage, auf der der Aufguss erfolgt zeitaufwendig sichergestellt werden. Dies ist insbesondere bei großen Glasplatten beziehungsweise großen Unterlagen, welche zur Herstellung von Brandschutzmitteln mit großen Abmessungen nötig sind, problematisch und zeitaufwendig, da die Handhabung in diesem Fall noch schwieriger wird.

Aus den Druckschriften DE 195 25 263 und DE 35 30 968 sind beispielsweise Verfahren zur Herstellung von Brandschutzmitteln aus einem intumeszierenden Material bekannt, bei denen eine Lösung aus einem intumeszierenden Material zwischen zwei durch einen Rahmen auf Abstand gehaltene Begrenzungsplatten gegossen wird. Dabei können die Begrenzungsplatten insbesondere Glasplatten sein.

Solche Gießverfahren weisen ebenfalls verschiedene Nachteile auf. Insbesondere kann es zur Bildung von Hohlräumen beziehungsweise zur Bildung von Lufteinschlüssen oder Luftblasen kommen. Das führt ebenfalls dazu, dass es problematisch werden kann, eine homogene Schichtdicke und Zusammensetzung zu erreichen. Darüber hinaus muss der Abstand zwischen den Begrenzungsplatten meist relativ groß sein, damit der Lauf der Lösung eines intumeszierenden Materials zwischen den Begrenzungsplatten überhaupt möglich ist. Dadurch können durch Gießverfahren zumeist nur sehr dicke Brandschutzmittel hergestellt werden.

Die Trocknung der Brandschutzmittel ist ebenfalls problematisch, da eine homogene Trocknung in einem relativ großen Ofen insbesondere bei vielen übereinander gestapelten zu trocknenden Brandschutzmitteln schwer zu bewerkstelligen ist. Die Parameter für die Trocknung müssen dabei umfangreich und präzise an die Zusammensetzung des intumeszierenden Materials angepasst werden, damit zum Beispiel eine Blasenbildung möglichst verhindert werden kann. Zudem ist die Stapelung der Brandschutzmittel zum Trocknen allgemein problematisch, da ein Ablaufen des intumeszierenden Materials von einem der gestapelten Brandschutzmittel die Zerstörung aller darunter liegenden Brandschutzmittel zur Folge haben kann.

Wenn die Homogenität der Dicke und/oder der Zusammensetzung und/oder der Trocknung nicht ausreicht, kann es dazu kommen, dass das intumeszierende Material im Brandfall unregelmäßig aufbläht. Ein solch unregelmäßiges Aufblähen des Brandschutzmittels aus intumeszierendem Material im Brandfall kann zum Beispiel, wenn das Brandschutzmittel zwischen zwei Glasscheiben angebracht ist, zum Bruch der Glasscheibe führen, da der Druckaufbau auf die Glasscheiben durch das unregelmäßige Aufblähen ungleichmäßig wird.

Des Weiteren ist bekannt, dass das Trocknen in einer sauerstoffreichen Atmosphäre erfolgen kann, um die Stabilität der Brandschutzschicht zu erhöhen und die Blasenbildung innerhalb dieser Schicht zu verlangsamen.

Beim Trocknen in einer sauerstoffreichen Atmosphäre, welches zumeist mehrere Stunden dauert, kann es zur Anreicherung von Sauerstoff innerhalb des intumeszierenden Materials und des entsprechenden Brandschutzmittels kommen. Daher können sie die Brandschutzeigenschaften der Brandschutzmittel beziehungsweise der intumeszierenden Materialien negativ beeinflussen, da der im intumeszierenden Material befindliche Sauerstoff im Brandfall Feuer nähren kann.

Es ist Aufgabe der vorliegenden Erfindung, ein Brandschutzmittel mit hervorragenden Brandschutzeigenschaften - insbesondere mit einer niedrigen Wärmeabstrahlung im Brandfall - zur Verfügung zu stellen.

Ferner ist es wünschenswert, dass das Brandschutzmittel einzelne, mehrere oder sämtliche der vorgenannten Nachteile des Standes der Technik nicht mehr aufweist.

Erfindungsgemäß wird diese Aufgabe durch ein Mittel mit den Merkmalen der unabhängigen Ansprüche 1 oder 2 gelöst. Vorteilhafte Weiterbildungen des Mittels ergeben sich aus den Unteransprüchen.

Ein erfindungsgemäßes Brandschutzmittel umfasst dabei mindestens ein intumeszierendes Material und wird ausgehend von einer Lösung hergestellt, deren Glyceringehalt zum Beispiel unter 6 Gew.-%, bevorzugt zwischen 0,2 Gew.-% und 5 Gew.-%, weiter bevorzugt zwischen 0,5 Gew.-% und 4 Gew.-%, weiter bevorzugt zwischen 1 Gew.-% und 3,5 Gew.-% , weiter bevorzugt zwischen 1,5 Gew.-% und 3,2 Gew.-%, besonders bevorzugt zwischen 2 Gew.-% und 3 Gew.-%, liegt. Dieser besonders niedrige Glyceringehalt kann dabei überraschend ausreichen, um die zur Herstellung der Brandschutzmittel nötige Viskosität der Lösung zu erreichen und wirkt sich dabei zudem ebenfalls sehr positiv auf das Verhalten der Brandschutzmittel im Brandfall aus, da diese im Brandfall weitaus resistenter werden und eine geringere Schwärzung und Blasenbildung aufweisen können. In der Tat zersetzt sich - beziehungsweise verbrennt - Glycerin schon bei relativ niedrigen Temperaturen. Ein hoher Glyceringehalt kann daher die Brandschutzeigenschaften der Brandschutzmittel negativ beeinflussen und auch zur Rauchentwicklung beitragen. Jedoch wird Glycerin meist zu der zur Herstellung von Brandschutzmitteln verwendeten Lösung zugegeben, um die Viskosität der Lösung zu erhöhen, damit die Viskosität der Lösung für die Aufguss- beziehungsweise Gießverfahren, welche zur Herstellung der Brandschutzmittel verwendet werden, ausreicht. Dabei soll insbesondere verhindert werden, dass die Lösung besonders bei Unachtsamkeiten beziehungsweise kleineren Fehlern, während der Produktion allzu einfach über den Ablaufschutzrand und/oder den Begrenzungsrahmen hinaus läuft. Zudem verbessert die Zugabe von Glycerin die mechanischen Eigenschaften und insbesondere die Flexibilität der Brandschutzmittel, Dadurch kann zum Beispiel das Risiko der Rissbeziehungsweise Bruchbildung während der Handhabung der Brandschutzmittel reduziert werden. Das führt dazu, dass deren Handhabung während und auch nach ihrer Herstellung vereinfacht wird. Insbesondere ist eine hohe Flexibilität erforderlich, wenn ein Brandschutzmittel durch ein Aufgussverfahren auf einer festen Unterlage hergestellt wird, von der es entfernt und insbesondere abgezogen werden muss, um seiner bestimmungsgemäßen Benutzung zugeführt zu werden, da eine hohe Flexibilität zum Beispiel das Risiko einer Beschädigung oder einer Zerstörung des Brandschutzmittels beim Entfernen beziehungsweise beim Abziehen von einer festen Unterlage reduziert.

Bevorzugterweise handelt es sich bei der zur Herstellung der Brandschutzmittel verwendeten Lösung um eine wässerige Lösung, durch die das Herstellungsverfahren und insbesondere die Abfall-beseitigung vereinfacht werden. Es können jedoch zum Beispiel auch Lösungen auf Alkoholbasis oder Lösungen, welche Mischungen aus Wasser und mindestens einem Alkohol umfassen, verwendet werden. In einer besonderen Ausführungsform der vorliegenden Erfindung kann die Lösung, welche zur Herstellung eines Brandschutzmittels verwendet werden kann, zum Beispiel bis zu 90 Gew.-%, bevorzugt zwischen 25 Gew.-% und 85 Gew.-%, weiter bevorzugt zwischen 35 Gew.-% und 80 Gew.-%, weiter bevorzugt zwischen 45 Gew.-% und 75 Gew.-%, besonders bevorzugt zwischen 55 Gew.-% und 70 Gew.-%, Wasser, mindestens eines Alkohols oder Mischungen davon umfassen.

Darüber hinaus kann ein erfindungsgemäßes Brandschutzmittel auch mindestens ein Wasserglas umfassen. Dieses Wasserglas kann dabei als intumeszierendes Material dienen. Ein Wasserglas umfasst dabei beispielsweise Siliziumoxid, mindestens ein alkalisches Oxid sowie gegebenenfalls Wasser und/oder mindestens ein Additiv. Die Verwendung von Wasserglas als intumeszierendes Material in einem erfindungsgemäßen Brandschutzmittel bietet, insbesondere wenn ein Aufbringen eines erfindungsgemäßen Brandschutzmittels auf ein Glassubstrat, wie beispielsweise eine Glasplatte, gewünscht oder geplant ist, den Vorteil einer hohen Kompatibilität zwischen Glassubstrat und dem als intumeszierendes Material verwendeten Wasserglas. Dadurch kann einer Delamination, welche im Extremfall zum Beispiel bei der Verwendung von Hydrogelen als intumeszierendem Material auftreten kann, vorgebeugt werden.

Des Weiteren kann ein erfindungsgemäßes Brandschutzmittel auch transparent sein. Das ist insbesondere von Vorteil, wenn ein Aufbringen eines erfindungsgemäßen Brandschutzmittels auf ein Glassubstrat, wie beispielsweise eine Glasplatte, zum Beispiel zur Herstellung einer Brandschutzverglasung gewünscht oder geplant ist.

In einer weiteren Ausführungsform der vorliegenden Erfindung kann das erfindungsgemäße Brandschutzmittel ausgehend von einer Lösung, deren Gehalt an SiO₂ zum Beispiel zwischen 10 Gew.-% und 60 Gew.-%, bevorzugt zwischen 15 Gew.-% und 50 Gew.-%, weiter bevorzugt zwischen 20 Gew.-% und 40 Gew.-%, weiter bevorzugt zwischen 22 Gew.-% und 35 Gew.-%, besonders bevorzugt zwischen 25 Gew.-% und 30 Gew.-%, liegt, hergestellt werden. Ein solcher SiO₂-Gehalt ermöglicht es, sowohl eine für das Herstellungsverfahren ausreichende Viskosität der Lösung als auch sehr gute Eigenschaften des Wasserglases als intumeszierendes Material sicherzustellen. Dadurch wird die Herstellung der Brandschutzmittel vereinfacht, da eine ausreichende Viskosität der Lösung sicherstellt, dass die Lösung besonders bei Unachtsamkeiten beziehungsweise kleineren Fehlern während der Produktion allzu einfach über den Ablaufschutzrand und oder den Begrenzungsrahmen hinaus läuft. Zudem können durch einen solchen Siliziumoxidgehalt auch die Eigenschaften des Wasserglases und damit auch die Brandschutzeigenschaften des Brandschutzmittels optimiert werden.

Des Weiteren kann das erfindungsgemäße Brandschutzmittel gegebenenfalls mindestens zwei alkalische Oxide umfassen. Dadurch können die Eigenschaften des Wasserglases und damit auch die Brandschutzeigenschaften des Brandschutzmittels weiter optimiert werden. Dabei kann/können das/die alkalische(n) Oxid(e) in einer besonderen Ausführungsform des erfindungsgemäßen Brandschutzmittels aus K₂O und Na₂O und Li₂O ausgewählt werden. Das Einbringen eines Kalium- und/oder Lithiumoxids kann dabei beispielsweise zu einer Verbesserung der Brandschutzeigenschaften durch ein homogeneres Aufschäumen im Brandfall, zur Verbesserung der mechanischen Eigenschaften insbesondere der Flexibilität und damit zu einer bequemeren Handhabung sowie zu einer Reduzierung der Trockenzeit führen.

In einer anderen Ausführungsform des erfindungsgemäßen Brandschutzmittels kann das Verhältnis von SiO₂ zu Alk₂O zum Beispiel zwischen 1:1 und 10:1, bevorzugt zwischen 1,5:1 und 7,5:1, weiter bevorzugt zwischen 2:1 und 6:1, weiter bevorzugt zwischen 2,5:1 und 5:1 besonders bevorzugt zwischen 2,5:1 und 4:1, betragen. Dabei kann sich eine Erhöhung des Verhältnisses von SiO₂ zu Alk₂O positiv auf die Brandschutzeigenschaften auswirken. Dadurch können die Eigenschaften des Wasserglases und damit auch die Brandschutzeigenschaften des Brandschutzmittels weiter optimiert werden.

In einer besonders bevorzugten Ausführungsform der vorliegenden Erfindung kann ein erfindungsgemäßes Brandschutzmittel ein Verhältnis von Na₂O zu K₂O zum Beispiel zwischen 1:1 und 20:1, bevorzugt zwischen 2:1 und 17,5:1, weiter bevorzugt zwischen 2,5:1 und 15:1, weiter bevorzugt zwischen 5:1 und 12,5:1, besonders bevorzugt zwischen 7:1 und 12:1, aufweisen. Das Einbringen von Kaliumoxid kann dabei zu einer Verbesserung der Brandschutzeigenschaften durch ein homogeneres Aufschäumen im Brandfall, zur Verbesserung der mechanischen Eigenschaften insbesondere der Flexibilität und damit zu einer bequemeren Handhabung sowie zu einer Reduzierung der Trockenzeit führen. Eine starke Reduzierung des Verhältnisses von Na₂O zu K₂O kann sich dabei jedoch auch negativ auf die Brandschutzeigenschaften der Brandschutzverglasung auswirken und im Extremfall die Haftung an ein Substrat insbesondere an eine Glasscheibe negativ beeinflussen. Dadurch können die Eigenschaften des Wasserglases und damit auch die Brandschutzeigenschaften des Brandschutzmittels ebenfalls noch weiter optimiert werden.

Zudem kann ein erfindungsgemäßes Brandschutzmittel in einer bevorzugten Ausführungsform ausgehend von einer Lösung, deren Gehalt an Na₂O zum Beispiel zwischen 1 Gew.-% und 20 Gew.-%, bevorzugt zwischen 2,5 Gew.-% und 17,5 Gew.-%, weiter bevorzugt zwischen 5 Gew.-% und 15 Gew.-%, weiter bevorzugt zwischen 6 Gew.-% und 12,5 Gew.-%, besonders bevorzugt zwischen 7 Gew.-% und 12 Gew.-%, liegt, hergestellt werden. Dadurch können die Eigenschaften des Wasserglases und damit auch die Brandschutzeigenschaften des Brandschutzmittels ebenfalls noch weiter optimiert werden.

Ein erfindungsgemäßes Brandschutzmittel kann dabei einen Wassergehalt zum Beispiel zwischen 10 Gew.-% und 40 Gew.-%, bevorzugt zwischen 15 Gew.-% und 35 Gew.-%, weiter bevorzugt zwischen 16 Gew.-% und 30 Gew.-%, weiter bevorzugt zwischen 18 Gew.-% und 28 Gew.-%, besonders bevorzugt zwischen 20 Gew.-% und 24 Gew.-%, aufweisen, Dadurch können die Eigenschaften des Wasserglases und damit auch die Brandschutzeigenschaften des Brandschutzmittels ebenfalls noch weiter optimiert werden.

Zudem kann der Wassergehalt auch die Haftung des Brandschutzmittels an ein Substrat und insbesondere an der Folie beeinflussen. Die Folie kann vorzugsweise ein flexibles, möglichst elastisches, wenig permeables Material, beispielsweise ein Polymer oder einen engmaschigen, möglichst wenig permeablen Flies- oder Seidenstoff umfassen.

Zudem kann der Wassergehalt auch die Haftung des Brandschutzmittels an ein Substrat und insbesondere an der Folie bevorzugt der Polymerfolie beeinflussen. Dadurch kann das Risiko einer Beschädigung beziehungsweise einer Zerstörung des Brandschutzmittels zum Beispiel beim Abziehen der Folie bevorzugt der Polymerfolie, welche zum Beispiel insbesondere durch eine zu starke Haftung an der Folie bevorzugt der Polymerfolie verursacht werden kann, reduziert werden.

In einer weiteren bevorzugten Ausführungsform eines erfindungsgemäßen Brandschutzmittels kann das Brandschutzmittel mindestens ein Additiv umfassen.

Dabei kann der Additivgehalt zum Beispiel zwischen 0,0401 Gew.-% und 60 Gew.-%, bevorzugt zwischen 2,5 Gew.-% und 50 Gew.-%, weiter bevorzugt zwischen 5 Gew.-% und 40 Gew.-%, weiter bevorzugt zwischen 10 Gew.-% und 30 Gew.-%, besonders bevorzugt zwischen 15 Gew.-% und 20 Gew.-%, betragen. Dabei können dadurch zum Beispiel die Stabilität und insbesondere die UV-Stabilität, die Flexibilität, die Affinität zu einem Substrat und/die Brandschutzeigenschaften verbessert werden.

Das/die Additiv(e) für erfindungsgemäße Brandschutzmittel kann /können beispielsweise ausgewählt werden aus:
Polyolen wie z. B. Ethylenglycol, Propan-1,3-diol, Butan-1,4-diol, Glycerin oder Sorbitol sowie insbesondere Polyglycerine,
Tensiden,
Polysäuren wie z. B. Adipinsäure, Apfelsäure, Weinsäure, Zitronensäure, Oxalsäure oder auch Borsäure,
flammenpyrolytisch hergestellten Pulvern oder entsprechenden Nanopartikeln wie z. B. Aluminium-, Calcium-, Magnesium-, Zirkon- oder Titanoxid,
Silane, Siloxane,
organischen Polymeren wie z. B. Polyvinylalkohol, Polyvinylamin, Polyvinylsulfonat, Polyacrylate, Polycarboxylate, Polyacrylamid oder Polydimethyldiallylammoniumchlorid
sowie deren monomere und oligomere Einheiten
und Copolymerisate wie z. B. Styrol-Acrylat-Copolymere,
Schichtsilikaten wie z.B. Natrosilit (Na₂Si₂O₅), Makatit (Na₂Si₄O₈(OH)₂*4H₂O), Magadiit (Na₂Si₁₄O₂₉*11H₂O), Kenyait (Na₂Si₂₂O₄₅*10H₂O), Kanemit (NaHSi₂O₅*3H₂O), Revdit (Na₂Si₂C₅*5H₂O) und Grumantit (NeHSi₂O₅*0,9H₂O) und Schichtkieselsäuren wie z. B solche der annähernden Formel H₂Si_{2y}O_{2y+1} (y=1,2,4,7,11) und/oder Nanokompositen wie z. B. organisch modifizierte Schichtsilikate und Schichtkieselsäuren.

Das Einbringen von Polyolen und/oder Polysäuren und/oder organischen Polymeren sowie deren monomere und oligomere Einheiten und Copolymerisate als Additiv(e) in ein erfindungsgemäßes Brandschutzmittel kann dabei zum Beispiel die mechanischen Eigenschaften, insbesondere die Flexibilität und/oder die UV-Stabilität der Brandschutzmittel und/oder die Trockenzeit und/oder die Riss- beziehungsweise Blasenbildung positiv beeinflussen. Das Einbringen von Aluminium-, Calcium-, Magnesium-, Zirkon- oder Titanoxid und/oder Schichtsilikaten und/oder Schichtkieselsäuren als Additiv(e) in ein erfindungsgemäßes Brandschutzmittel kann wiederum zum Beispiel die Brandschutzeigenschaften des Brandschutzmittels weiter optimieren. Das Einbringen von Silanen und/oder Siloxanen als Additive in ein erfindungsgemäßes Brandschutzmittel kann gegebenenfalls zum Beispiel die Homogenität des Brandschutzmittels und damit sowohl die mechanischen Eigenschaften als auch die Riss- beziehungsweise Blasenbildung positiv beeinflussen. Das Einbringen von Tensiden als Additive in ein erfindungsgemäßes Brandschutzmittel kann gegebenenfalls zum Beispiel die Affinität zu einem Substrat und damit die Benetzbarkeit des Substrates sowie die Trockenzeit positiv beeinflussen.

In einer weiteren bevorzugten Ausführungsform eines erfindungsgemäßen Brandschutzmittels kann das erfindungsgemäße Brandschutzmittel eine durchschnittliche Dicke zwischen 0,1 mm bis 6 mm, bevorzugt zwischen 0,2 mm bis 4 mm, weiter bevorzugt zwischen 0,3 mm bis 3 mm, weiter bevorzugt zwischen 0,35 mm bis 2 mm, weiter bevorzugt zwischen 0,4 mm bis 1 mm, weiter bevorzugt zwischen 0,45 mm bis 0,9 mm, weiter bevorzugt zwischen 0,5 mm bis 0,8 mm, besonders bevorzugt zwischen 0,55 mm bis 0,7 mm, aufweisen. Dabei wirkt sich eine reduzierte Dicke positiv auf die Trockenzeit aus. Zudem ist bei dünneren Brandschutzmitteln das Risiko niedriger, dass das Brandschutzmittel beim Aufblähen im Brandfall einen Rahmen oder eine Verglasungseinheit, in das es gegebenenfalls eingebracht wird, verformt oder im Extremfall sogar aufbricht. Zudem wird dank dünnerer Brandschutzmittel auch das Risiko reduziert, dass eine Glasscheibe, welche zum Beispiel in einer Brandschutzverglasung neben dem Brandschutzmittel angeordnet werden kann, beim Aufblähen des Brandschutzmittels im Brandfall zerbricht, da der Druck, welcher beim Aufschäumen aufgebaut werden kann, von der Menge des aufschäumenden Materials und damit von der Dicke des Brandschutzmittels abhängt. Mit Dicke in Sinne der vorliegenden Erfindung kann auch die durchschnittliche Dicke gemeint sein. Jedoch führt eine Reduzierung der Dicke der Brandschutzmittel eigentlich zu schlechteren Brandschutzeigenschaften. Dabei wurde jedoch bezüglich der erfindungsgemäßen Brandschutzmittel festgestellt, dass die Brandschutzeigenschaften selbst bei sehr kleinen Dicken hervorragend sind.

Die Toleranz für die Dicke beziehungsweise die durchschnittliche Dicke des Brandschutzmittels, welches mindestens ein intumeszierendes Material umfasst, kann dabei in einer bevorzugten Ausführungsform des erfindungsgemäßen Verfahrens zur Herstellung eines Brandschutzmittel zum Beispiel zwischen 1 % und 30%, bevorzugt zwischen 5 % und 25%, bevorzugt zwischen 7% und 20%, besonders bevorzugt zwischen 10% und 15 % liegen. Daher sollte die Dicke beziehungsweise die durchschnittliche Dicke eines Brandschutzmittels bevorzugt über die gesamte Fläche des Brandschutzmittels nicht um mehr als zum Beispiel zwischen 5% und 25% bevorzugt zwischen 7% und 20%, besonders bevorzugt zwischen 10% und 15 % der gewünschten Dicke des Brandschutzmittels abweichen. Dabei kann die Dicke zur Einhaltung der Toleranz gegebenenfalls kontinuierlich und/oder gegebenenfalls über die gesamte Breite des Brandschutzmittels überwacht beziehungsweise gemessen werden und/oder mehrmals und/oder an verschiedenen Orten des Brandschutzmittels überwacht beziehungsweise gemessen werden, wobei aus mindesten zwei Messungen eine durchschnittliche Dicke errechnet wird. Dadurch lässt sich gegebenenfalls auch unabhängig der übrigen Merkmale des Brandschutzmittels eine sehr gute Homogenität der Dicke des Brandschutzmittels sicherstellen. Die Homogenität der Dicke ist dabei mit zunehmender Dicke einfacher zu erreichen. Dadurch kann ein sehr homogenes Aufschäumen der Brandschutzmittel im Brandfall erreicht und ein Bruch einer Glasscheibe, neben die ein Brandschutzmittel möglicherweise angeordnet wurde, durch einen gleichmäßigen Druckaufbau beim Aufschäumen im Brandfall weitestgehend vermieden werden. Daher können optimale Brandschutzeigenschaften und insbesondere ein homogenes Aufschäumen im Brandfall sichergestellt werden. Dabei trägt wahrscheinlich insbesondere die nahezu intakte Glasscheibe, wie ein zusätzlicher Hitzeschild zur Verbesserung der Brandschutzeigenschaften bei.

In einer weiteren Ausführungsform Brandschutzmittels kann während der Herstellung eine Messung der Dicke des Brandschutzmittels gegebenenfalls kontinuierlich erfolgen, Dadurch kann die Homogenität der Dicke überprüft werden. Daher können optimale Brandschutzeigenschaften und insbesondere ein homogenes Aufschäumen im Brandfall sichergestellt werden.

Zudem kann ein erfindungsgemäßes Brandschutzmittel mindestens eine Folie bevorzugt eine Polymerfolie umfassen. Diese Folie bevorzugt Polymerfolie kann während der Herstellung der Brandschutzmittel als Substrat beziehungsweise Trägermaterial dienen. Dabei kann das Material für die Folie bevorzugt für die Polymerfolie zum Beispiel ausgewählt werden aus aufgrund ihrer Eigenschaften besonders geeigneten Materialien wie: Polyolefinen, Polyethylen und Polypropylen, Polyethylenterephthalat (PET), Polyestern, Teflon, Mischungen und/oder Copolymeren davon. Die Folie beziehungsweise bevorzugt die Polymerfolie dient während des Herstellungsverfahrens der erfindungsgemäßen Brandschutzmittel und auch danach dazu, die mechanischen Eigenschaften der erfindungsgemäßen Brandschutzmittel zu verbessern und dabei ihre Handhabung zu erleichtern. In der Tat trägt die Folie beziehungsweise bevorzugt die Polymerfolie dazu bei, dass die Brandschutzmittel bei ihrer Herstellung und danach bequem gehandhabt, aufgerollt und gegebenenfalls zugeschnitten werden können, weitestgehend ohne dass es dabei zu einer Beschädigung der Brandschutzmittel kommt. Die Folie beziehungsweise bevorzugt die Polymerfolie sollte dazu selbst gute mechanische Eigenschaften aufweisen und insbesondere ausreichend temperaturstabil, reißfest und flexibel sein. In einer bevorzugten Ausführungsform der erfindungsgemäßen Brandschutzmittel kann die Folie beziehungsweise bevorzugt die Polymerfolie dabei einer haftfördernden Behandlung und besonders bevorzugt zum Beispiel einer Corona-Behandlung unterzogen worden sein. Dadurch lässt sich die Haftung des Brandschutzmittels an der Folie bevorzugt an der Polymerfolie verbessern. Die Verbesserung der mechanischen Eigenschaften der Brandschutzmittel durch die Folie bevorzugt durch die Polymerfolie kann daher effizienter werden. Zudem wird dadurch die Beschichtung der Folie beziehungsweise bevorzugt der Polymerfolie während des Herstellungsverfahrens der Brandschutzmittel vereinfacht.

Das erfindungsgemäße Verfahren zur Herstellung eines Brandschutzmittels kann dabei zum Beispiel folgende Schritte umfassen:
- Beschichtung einer Folie beziehungsweise bevorzugt einer Polymerfolie mit einer Lösung, welche mindestens ein intumeszierendes Material umfasst, sodass sich eine Schicht bildet, welche gegebenenfalls mindestens ein intumeszierendes Material umfasst,
- Trocknung der Folie beziehungsweise bevorzugt einer Polymerfolie und der Schicht.

Dabei kann die Beschichtung gegebenenfalls auf einer unter Spannung glatt und gegebenenfalls waagerecht gehaltenen Folie beziehungsweise bevorzugt Polymerfolie erfolgen. Eine solche Folie beziehungsweise bevorzugt Polymerfolie weist im Gegensatz zum Beispiel zu unterschiedlichen Glasplatten keine größeren Unterschiede bezüglich der Oberflächenbeschaffenheit auf. Somit kann der negative Einfluss von unterschiedlichen Oberflächenbeschaffenheiten auf die Homogenität der Dicke bei der Verwendung einer Folie beziehungsweise bevorzugt einer Polymerfolie als Substrat im Vergleich zur Verwendung von unterschiedlichen Unterlagen, insbesondere von unterschiedlichen Glasplatten, weitestgehend aufgehoben werden. Dadurch können Brandschutzmittel mit besonders homogenen Dicken und einem gegebenenfalls daraus resultierenden besonders homogenen Aufschäumen im Brandfall erhalten werden. Die Folie beziehungsweise bevorzugt die Polymerfolie dient dabei, wie bereits erwähnt, zur Verbesserung der mechanischen Eigenschaften der erfindungsgemäßen Brandschutzmittel, Dadurch kann die Handhabung der erfindungsgemäßen Brandschutzmittel erheblich vereinfacht werden. Dadurch kann insbesondere, wenn ein Brandschutzmittel zum Beispiel in einer Brandschutzverglasung neben einer Glasscheibe angeordnet ist, das Risiko des Bruchs und/oder der Zersplitterung der Glasscheibe beim Aufblähen des Brandschutzmittels im Brandfall minimiert werden, da der Druckaufbau auf die Glasscheiben aufgrund des homogenen Aufschäumens gleichmäßig erfolgt.

In einer bevorzugten Ausführungsform des erfindungsgemäßen Verfahrens zur Herstellung eines Brandschutzmittels, erfolgt die Beschichtung einer Folie beziehungsweise bevorzugt einer Polymerfolie mit einer Lösung, welche mindestens ein intumeszierendes Material umfasst, wobei eine haftfördernde Behandlung der Folie beziehungsweise bevorzugt der Polymerfolie erfolgt. Insbesondere kann diese Behandlung zum Beispiel eine Corona-Behandlung umfassen. Eine Corona-Behandlung ist eine Behandlung, welche insbesondere zum Beispiel für Folie beziehungsweise bevorzugt für Polymerfolien verwendet werden kann, bei der die Folie beziehungsweise bevorzugt die Polymerfolie zum Beispiel über eine geerdete Metallwalze an einer Elektrode insbesondere einer Sprühelektrode vorbeigeführt werden kann. Durch die zwischen Elektrode und Walze entstehenden Funkenentladungen kann die Haftung einer Schicht an der Folie beziehungsweise bevorzugt der Polymerfolie verbessert werden. Die gegebenenfalls apolare Struktur der Folie beziehungsweise bevorzugt der Polymerfolie kann dabei wahrscheinlich durch Oxidation zumindest teilweise in eine polare Struktur umgewandelt werden. Da dieser Effekt mit zunehmender Lagerungszeit stark abnehmen kann, erfolgt die haftfördernde Behandlung besonders bevorzugterweise unmittelbar vor der Beschichtung. Dadurch lässt sich die Haftung der Schicht an der Folie beziehungsweise bevorzugt der Polymerfolie verbessern. Die Verbesserung der mechanischen Eigenschaften der Brandschutzmittel durch die Folie beziehungsweise bevorzugt die Polymerfolie kann daher effizienter werden. Zudem wird dadurch die Beschichtung der Folie beziehungsweise bevorzugt der Polymerfolie während des Herstellungsverfahrens der Brandschutzmittel vereinfacht, da die Schicht bis zur erforderlichen Dicke ohne ein Verlaufen beziehungsweise Ablaufen auf die Folie beziehungsweise bevorzugt die Polymerfolie aufgetragen werden kann. Dadurch kann ein Ablaufschutz bei der Beschichtung überflüssig werden. Ein Ablaufen der Lösung, welche mindestens ein intumeszierendes Material umfasst, von einem Substrat, auf dem es während des Verfahrens zur Herstellung eines Brandschutzmittels aufgetragen wurde, kann dabei zu einer unplanmäßig und gegebenenfalls heterogen reduzierten Dicke und zu entsprechend schlechten Brandschutzeigenschaften führen. Eine haftfördernde Behandlung trägt demnach dazu bei, die kontinuierliche Beschichtung der Folie beziehungsweise bevorzugt der Polymerfolie insbesondere auch bei einem geringen Glyzeringehalt und einer gegebenenfalls daher niedrigeren Viskosität der Lösung ohne ein Ablaufen der Lösung von der Folie beziehungsweise bevorzugt der Polymerfolie zu vereinfachen.

Dadurch kann der Ausschuss bei einem erfindungsgemäßen Verfahren zur Herstellung von Brandschutzmitteln stark reduziert werden, da das Risiko eines Ablaufens der Lösung, welche mindestens ein intumeszierendes Material umfasst, von der Folie beziehungsweise bevorzugt der Polymerfolie stark reduziert werden kann. Zudem kann die haftfördernde Behandlung insbesondere auch kontinuierlich erfolgen. Dadurch kann eine Zeitersparnis bei der Herstellung der Brandschutzmittel erreicht werden. Dies kann eine schnelle und bequeme Herstellung der erfindungsgemäßen Brandschutzmittel insbesondere in einem großen Umfang ermöglichen.

In einer bevorzugten Ausführungsform des erfindungsgemäßen Verfahrens zur Herstellung von Brandschutzmitteln kann die Beschichtung der Folie beziehungsweise bevorzugt der Polymerfolie kontinuierlich erfolgen. Dabei kann eine Folie beziehungsweise bevorzugt eine Polymerfolie zum Beispiel von einer Rolle abgerollt werden, bevorzugt unter Spannung glatt und gegebenenfalls waagerecht gehalten werden und so mit einer Lösung, welche mindestens ein intumeszierendes Material umfasst, beschichtet werden, wobei die Beschichtung kontinuierlich und insbesondere kontinuierlich mit einer kontrollierten Dicke auf der sich weiterbewegenden Folie beziehungsweise bevorzugt Polymerfolie erfolgt. Dabei kann kontinuierlich im Sinne der Erfindung insbesondere bedeuten, dass das Verfahren zum Beispiel auch beim Wechsel der Rolle der Folie beziehungsweise bevorzugt der Polymerfolie weiter laufen kann. Das kann zum Beispiel durch das Vorhandensein eines Puffers, welcher eine ausreichende Länge beziehungsweise Menge der Folie beziehungsweise bevorzugt der Polymerfolie sozusagen aus Vorrat gegebenenfalls unter Spannung enthält und bei einem Rollenwechsel freigibt, damit das Herstellungsverfahren kontinuierlich ablaufen kann, erfolgen. Nach Wechsel der Rolle der Folie beziehungsweise bevorzugt der Polymerfolie kann der Puffer dann wieder mit einer ausreichenden Länge beziehungsweise Menge an Folie beziehungsweise bevorzugt an Polymerfolie gefüllt werden. Ein solcher Puffer kann zum Beispiel auf Distanz zueinander angeordnete Umlaufrollen umfassen, über die die Folie beziehungsweise bevorzugt die Polymerfolie geführt werden kann, wobei sich die Distanz zwischen den Rollen verändern lässt. Die kontinuierliche Kontrolle der Dicke kann dabei zum Beispiel sowohl durch eine kontrollierte Abgabe der Lösung als auch durch ein zum Beispiel in die Vorrichtung zur Beschichtung vorgesehenes rakelähnliches Teil, welches eine gleichmäßige Verteilung der Lösung und das Erhalten eine besonders homogene Dicke ermöglicht. Dadurch erfolgt die Beschichtung nicht auf wechselnden Unterlagen wie bei einem Aufgussverfahren auf eine Glasplatte, welche nach jeder Herstellung eines Brandschutzmittels ausgewechselt wird, und schon auf Grund dieser Wechsel der damit verbundenen Schritte beziehungsweise Handgriffe und den möglicherweise daraus resultierenden Bewegungen und/oder Veränderungen der Unterlagen und insbesondere der Ausrichtung der Unterlagen, welche von der Oberflächenbeschaffenheit der Unterlagen vollkommen unabhängig sind, jedes Mal neu ausgerichtet werden müssen. Vielmehr kann die Beschichtung der sich bewegenden gegebenenfalls unter Spannung gehaltenen Folie beziehungsweise bevorzugt Polymerfolie kontinuierlich erfolgen, sodass die Ausrichtung der Folie beziehungsweise bevorzugt der Polymerfolie während des Verfahrens nach dem Einstellen zum Erreichen einer homogenen Dicke weitestgehend unverändert bleibt. Die Ausrichtung wird dabei insbesondere nicht durch den Wechsel der Unterlage beziehungsweise Glasplatten, den damit verbundenen Handgriffen und den möglicherweise daraus resultierenden Bewegungen und/oder Veränderungen beeinflusst. Darüber hinaus ist es ebenfalls nicht notwendig, das Brandschutzmittel nach der Beschichtung von der als Trägermaterial beziehungsweise Unterlage dienenden Folie beziehungsweise bevorzugt Polymerfolie abzuziehen, um mit der Herstellung der Brandschutzmittel fortzufahren. Daher entfallen auch die zum Abziehen der Brandschutzmittel notwendigen Schritte sowie die möglicherweise daraus resultierenden Bewegungen und/oder Veränderungen, insbesondere der Ausrichtung der Unterlage. Dadurch ist es möglich, Brandschutzmittel mit noch homogeneren Dicken herzustellen. Das ist insbesondere wichtig, wenn es sich um besonders dünne Schichten handelt, da bereits kleinste Abweichungen in diesen Fällen die Homogenität der Dicke der Brandschutzmittel sehr negativ beeinflusst. Demzufolge können dadurch Brandschutzmittel hergestellt werden, die eine besonders homogene Dicke aufweisen und ein besonders homogenes Aufschäumen im Brandfall ermöglichen. Dadurch kann insbesondere, wenn das Brandschutzmittel zum Beispiel in einer Brandschutzverglasung neben einer Glasscheibe angeordnet ist, das Risiko des Bruchs und/oder der Zersplitterung der Glasscheibe beim Aufblähen des Brandschutzmittels im Brandfall weiter minimiert werden, da der Druckaufbau auf die Glasscheiben aufgrund des besonders homogenen Aufschäumens sehr gleichmäßig erfolgt. Dabei kann eine intakte Glasscheibe viel besser als eine zerbrochene Glasscheibe, wie ein zusätzlicher Hitzeschild, zur Verbesserung der Brandschutzeigenschaften beitragen.

Des Weiteren kann dank eines Herstellungsverfahrens, welches eine kontinuierliche Beschichtung umfasst, auch eine Zeitersparnis bei der Herstellung der Brandschutzmittel erreicht werden. Dies kann eine schnelle und bequeme Herstellung der erfindungsgemäßen Brandschutzmittel insbesondere in einem großen Umfang ermöglichen. Zudem kann dank eines Herstellungsverfahrens, welches eine kontinuierliche Beschichtung umfasst, ein Zurechtscheiden der kontinuierlichen Bahn des Brandschutzmittels auf jede beliebige Länge erfolgen. Die Abmessungen der hergestellten Brandschutzmittel sind demnach lediglich noch durch die Breite der Folie beziehungsweise bevorzugt Polymerfolie begrenzt.

In einer weiteren Ausführungsform eines Verfahrens zur Herstellung eines Brandschutzmittels kann die Schicht, welche mindestens ein intumeszierendes Material umfasst, zum Beispiel mit einer durchschnittlichen Dicke von zwischen 0,1 mm und 2 mm, bevorzugt zwischen 0,4 mm bis 1,7 mm, weiter bevorzugt zwischen 0,6 mm bis 1,6 mm, weiter bevorzugt zwischen 0,7 mm bis 1,5 mm , besonders bevorzugt zwischen 0,8 mm bis 1,3 mm, auf die Folie beziehungsweise bevorzugt die Polymerfolie aufgebracht werden. Dabei wirkt sich eine Reduzierung der Dicke positiv auf die Trockenzeit aus. Zudem ist bei dünneren Schichten und den daraus hergestellten entsprechenden Brandschutzmitteln das Risiko niedriger, dass das Brandschutzmittel beim Aufblähen im Brandfall einen Rahmen oder eine Verglasungseinheit, in das es gegebenenfalls eingebracht wird, verformt oder im Extremfall sogar aufbricht. Zudem wird dank dünnerer Schichten und den daraus hergestellten entsprechenden Brandschutzmitteln auch das Risiko reduziert, dass eine Glasscheibe, welche zum Beispiel in einer Brandschutzverglasung neben dem Brandschutzmittel angeordnet werden kann, beim Aufblähen des Brandschutzmittels im Brandfall zerbricht, da der Druck, welcher beim Aufschäumen aufgebaut werden kann, von der Menge des aufschäumenden Materials und damit von der Dicke des Brandschutzmittels abhängt. Eigentlich führt eine Reduzierung der Dicke der Schicht und der daraus hergestellten entsprechenden Brandschutzmittel zu schlechteren Brandschutzeigenschaften. Es wurde jedoch bezüglich des erfindungsgemäßen Verfahrens zur Herstellung von Brandschutzmitteln und der erfindungsgemäßen Brandschutzmittel festgestellt, dass die Brandschutzeigenschaften selbst bei sehr kleinen Dicken hervorragend sind.

Die Toleranz für die Dicke beziehungsweise die durchschnittliche Dicke der Schicht, welche mindestens ein intumeszierendes Material umfasst, kann dabei in einer bevorzugten Ausführungsform des erfindungsgemäßen Verfahrens zur Herstellung eines Brandschutzmittel zum Beispiel zwischen 1 % und 30%, bevorzugt zwischen 5 % und 25%, bevorzugt zwischen 7% und 20%, besonders bevorzugt zwischen 10% und 15 % liegen. Daher sollte die Dicke beziehungsweise die durchschnittliche Dicke der Schicht bevorzugt über die gesamte Fläche der Schicht nicht um mehr als zum Beispiel zwischen 1 % und 30%, bevorzugt zwischen 5% und 25% bevorzugt zwischen 7% und 20%, besonders bevorzugt zwischen 10% und 15 % der gewünschten Dicke der Schicht abweichen. Dabei kann die Dicke zur Einhaltung der Toleranz gegebenenfalls kontinuierlich und/oder gegebenenfalls über die gesamte Breite der Schicht überwacht beziehungsweise gemessen werden und/oder mehrmals und/oder an verschiedenen Orten der Schicht überwacht beziehungsweise gemessen werden, wobei aus mindesten zwei Messungen eine durchschnittliche Dicke errechnet wird. Dadurch lässt sich gegebenenfalls auch unabhängig der übrigen Merkmale des Verfahrens zur Herstellung eines Brandschutzmittels eine sehr gute Homogenität der Dicke der Schicht sicherstellen. Die Homogenität der Dicke ist dabei mit zunehmender Dicke einfacher zu erreichen. Dadurch kann ein sehr homogenes Aufschäumen der Brandschutzmittel im Brandfall erreicht und ein Bruch einer Glasscheibe, neben die ein Brandschutzmittel möglicherweise angeordnet wurde, durch einen gleichmäßigen Druckaufbau beim Aufschäumen im Brandfall weitestgehend vermieden werden. Daher können optimale Brandschutzeigenschaften und insbesondere ein homogenes Aufschäumen im Brandfall sichergestellt werden. Dabei trägt wahrscheinlich insbesondere die nahezu intakte Glasscheibe, wie ein zusätzlicher Hitzeschild zur Verbesserung der Brandschutzeigenschaften bei.

Darüber hinaus kann die beschichtete gegebenenfalls unter Spannung gehaltene Folie beziehungsweise bevorzugt Polymerfolie bei einem Verfahren zur Herstellung eines Brandschutzmittels nach der Beschichtung kontinuierlich durch gegebenenfalls unter Spannung mindestens einen Trocknungsabschnitt geführt werden. Dabei wird eine kontinuierliche Trocknung der beschichteten Folie beziehungsweise bevorzugt Polymerfolie erreicht. Dadurch kann insbesondere im Vergleich zur Trocknung in einem Ofen oder in einer Trockenkammer eine Zeitersparnis bei der Herstellung der Brandschutzmittel erreicht werden. Dies kann eine schnelle und bequeme Herstellung der erfindungsgemäßen Brandschutzmittel insbesondere in einem großen Umfang ermöglichen. Zudem wird es dadurch unnötig, Brandschutzmittel während ihrer Herstellung zu stapeln, damit eine möglichst große Anzahl Brandschutzmittel im Ofen oder in der Trockenkammer getrocknet werden kann. Daher kann ein Auslaufen der Lösung über den Ablaufschutzrahmen oder den Begrenzungsrahmen eines Brandschutzmittels hinaus nicht mehr die Beschädigung beziehungsweise die Zerstörung aller darunter liegenden beziehungsweise darunter gestapelten Brandschutzmittel zur Folge haben, da das Stapeln zum Trocknen durch das kontinuierliche Trocknen überflüssig wird. Dadurch kann der Ausschuss beim erfindungsgemäßen Verfahren zur Herstellung von Brandschutzmitteln erheblich reduziert werden.

Des Weiteren ermöglicht eine Kombination einer kontinuierlichen Beschichtung der Folie beziehungsweise bevorzugt der Polymerfolie mit einer kontinuierlichen Trocknung der beschichteten Folie beziehungsweise bevorzugt Polymerfolie eine besonders schnelle und bequeme Herstellung von Brandschutzmitteln auch bei besonders großen erwünschten Stückzahlen.

In einer besonderen Ausführungsform des erfindungsgemäßen Verfahrens zur Herstellung eines Brandschutzmittels können mehrere unterschiedliche Trocknungsabschnitte vorgesehen sein, durch weiche die beschichtete Folie beziehungsweise bevorzugt Polymerfolie gegebenenfalls unter Spannung geführt wird. Diese Trocknungsabschnitte können sich dabei beispielsweise über die Temperatur und/oder die Luftfeuchtigkeit und/oder die Zusammensetzung der Atmosphäre in dem jeweiligen Trocknungsabschnitt von mindestens einem angrenzenden Trocknungsabschnitt unterscheiden.

Zudem kann die Trocknung in einer sauerstoffarmen Atmosphäre, welche weniger als 50 Gew.-% Sauerstoff umfasst, erfolgen. Dabei kann die Atmosphäre insbesondere zum Beispiel weniger als 40 Gew.-%, bevorzugt zwischen 1 Gew.-% und 35 Gew.-%, weiter bevorzugt zwischen 5 Gew.-% und 30 Gew.-%, weiter bevorzugt zwischen 10 Gew.-% und 25 Gew.-%, besonders bevorzugt zwischen 15 Gew.-% und 20 Gew.-%, Sauerstoff umfassen. Zudem dann die Trocknung in einer weiteren Ausführungsform des erfindungsgemäßen Verfahrens zur Herstellung von Brandschutzmitteln in einer Atmosphäre erfolgen, welche mehr als 50 Gew.-%, bevorzugt zwischen 50 Gew.-% und 98 Gew.-%, weiter bevorzugt zwischen 55 Gew.-% und 95 Gew.-%, weiter bevorzugt zwischen 60 Gew.-% und 90 Gew.-%, besonders bevorzugt zwischen70 Gew.-% und 80 Gew.-%, eines mindestens inerten Gases umfasst. Dabei kann/können das/die inerte(n) Gas(e) zum Beispiel insbesondere aus Argon und Stickstoff oder Mischungen davon ausgewählt werden. Dadurch kann einer während der Trocknung möglichen Einlagerung von Sauerstoff in das Brandschutzmittel vorgebeugt werden. Somit können die Brandschutzeigenschaften der Brandschutzmittel weiter verbessert werden. Die Trocknung in einer sauerstoffreichen Atmosphäre bietet jedoch eigentlich den Vorteil, eine bessere Stabilität der Brandschutzmittel und eine geringere beziehungsweise langsamere Blasenbildung in dem Brandschutzmittel zu erreichen. Es wurde jedoch überraschend festgestellt, dass die nach dem erfindungsgemäßen Verfahren hergestellten Brandschutzmittel auch ohne Trocknung in einer sauerstoffreichen Atmosphäre eine hervorragende Stabilität und eine sehr langsame Blasenbildung in den Brandschutzmitteln aufweisen.

In einer besonderen Ausführungsform eines erfindungsgemäßen Verfahrens zur Herstellung eines Brandschutzmittels kann die Trocknung bei einer Temperatur zwischen 35° C und 260 °C, bevorzugt zwischen 40 °C und 200°C, weiter bevorzugt zwischen 50 °C und 150 °C, weiter bevorzugt zwischen 75°C und 125 °C, besonders bevorzugt zwischen 80°C und 110 °C, erfolgen. Dadurch können die Eigenschaften des Wasserglases und damit auch die Brandschutzeigenschaften des Brandschutzmittels optimiert werden.

Besonders bevorzugt kann die Dauer der Trocknung in einem erfindungsgemäßen Verfahren zur Herstellung eines Brandschutzmittels zum Beispiel zwischen 20 Minuten und 180 Minuten, bevorzugt zwischen 30 Minuten und 150 Minuten, weiter bevorzugt zwischen 35 Minuten und 120 Minuten, weiter bevorzugt zwischen 40 Minuten und 100 Minuten, besonders bevorzugt zwischen 45 Minuten und 90 Minuten, betragen.

In einer weiteren Ausführungsform des Verfahrens zur Herstellung eines Brandschutzmittels kann die Trocknung bis zu einem Wassergehalt von zwischen 10 Gew.-% und 40 Gew.-%, bevorzugt zwischen 15 Gew.-% und 35 Gew.-%, weiter bevorzugt zwischen 16 Gew.-% und 30 Gew.-%, weiter bevorzugt zwischen 18 Gew.-% und 28 Gew.-%, besonders bevorzugt zwischen 20 Gew.-% und 24 Gew.-%, erfolgen. Dadurch können die Eigenschaften des Wasserglases und damit auch die Brandschutzeigenschaften des Brandschutzmittels ebenfalls noch weiter optimiert werden. Zudem kann der Wassergehalt auch die Haftung des Brandschutzmittels an ein Substrat und insbesondere an der Folie beziehungsweise bevorzugt der Polymerfolie beeinflussen. Dadurch kann das Risiko einer Beschädigung beziehungsweise einer Zerstörung des Brandschutzmittels zum Beispiel beim Abziehen der Folie beziehungsweise bevorzugt der Polymerfolie, welche zum Beispiel insbesondere durch eine zu starke Haftung an der Folie beziehungsweise bevorzugt der Polymerfolie verursacht werden kann, reduziert werden.

In einer weiteren bevorzugten Ausführungsform eines erfindungsgemäßen Verfahrens zur Herstellung eines Brandschutzmittels kann die Schicht auf der Folie beziehungsweise bevorzugt der Polymerfolie nach dem Trocknen eine durchschnittliche Dicke zwischen 0,1 mm bis 2 mm, bevorzugt zwischen 0,2 mm bis 1 mm, weiter bevorzugt zwischen 0,3 mm bis 0,9 mm, weiter bevorzugt zwischen 0,4 mm bis 0,8 mm , besonders bevorzugt zwischen 0,5 mm bis 0,7 mm, aufweisen. Dabei ist bei dünneren Dicken das Risiko niedriger, dass das Brandschutzmittel beim Aufblähen im Brandfall einen Rahmen oder eine Verglasungseinheit, in das es gegebenenfalls eingebracht wird, verformt oder im Extremfall sogar aufbricht, Zudem wird dank dünnerer Schichten auch das Risiko reduziert, dass eine Glasscheibe, welche zum Beispiel in einer Brandschutzverglasung neben dem Brandschutzmittel angeordnet werden kann, beim Aufblähen des Brandschutzmittels im Brandfall zerbricht, da der Druck, welcher beim Aufschäumen aufgebaut werden kann, von der Menge des aufschäumenden Materials und damit von der Dicke der Schicht abhängen kann. Jedoch führt eine Reduzierung der Dicke der Schichten eigentlich zu schlechteren Brandschutzeigenschaften. Dabei wurde jedoch bezüglich des erfindungsgemäßen Verfahrens zur Herstellung von Brandschutzmitteln festgestellt, dass die Brandschutzeigenschaften selbst bei sehr kleinen Dicken hervorragend sind.

Die Toleranz für die Dicke beziehungsweise die durchschnittliche Dicke der Schicht, welche mindestens ein intumeszierendes Material umfasst, nach dem Trocknen kann dabei in einer bevorzugten Ausführungsform des erfindungsgemäßen Verfahrens zur Herstellung eines Brandschutzmittel zum Beispiel zwischen 1 % und 30%, bevorzugt zwischen 5 % und 25%, bevorzugt zwischen 7% und 20%, besonders bevorzugt zwischen 10% und 15 % liegen. Daher sollte die Dicke beziehungsweise die durchschnittliche Dicke der Schicht nach dem Trocknen bevorzugt über die gesamte Fläche der Schicht nach dem Trocknen nicht um mehr als zum Beispiel zwischen 5% und 25% bevorzugt zwischen 7% und 20%, besonders bevorzugt zwischen 10% und 15 % der gewünschten Dicke der Schicht nach dem Trocknen abweichen. Dabei kann die Dicke zur Einhaltung der Toleranz gegebenenfalls kontinuierlich und/oder gegebenenfalls über die gesamte Breite der Schicht auch nach Trocknen überwacht beziehungsweise gemessen werden und/oder mehrmals und/oder an verschiedenen Orten der Schicht nach dem Trocknen überwacht beziehungsweise gemessen werden, wobei aus mindesten zwei Messungen eine durchschnittliche Dicke errechnet wird. Dadurch lässt sich gegebenenfalls auch unabhängig der übrigen Merkmale des Verfahrens zur Herstellung eines Brandschutzmittels eine sehr gute Homogenität der Dicke der Schicht nach dem Trocken sicherstellen. Zudem kann durch eine Messung beziehungsweise Überwachung der Dicke der Schicht vor und nach dem Trocknen eine noch größere Homogenität der Dicke der Brandschutzmittel erreicht werden. Die Homogenität der Dicke ist dabei mit zunehmender Dicke einfacher zu erreichen. Dadurch kann ein sehr homogenes Aufschäumen der Brandschutzmittel im Brandfall erreicht und ein Bruch einer Glasscheibe, neben die ein Brandschutzmittel möglicherweise angeordnet wurde, durch einen gleichmäßigen Druckaufbau beim Aufschäumen im Brandfall weitestgehend vermieden werden. Daher können optimale Brandschutzeigenschaften und insbesondere ein homogenes Aufschäumen im Brandfall sichergestellt werden. Dabei trägt wahrscheinlich insbesondere die nahezu intakte Glasscheibe, wie ein zusätzlicher Hitzeschild zur Verbesserung der Brandschutzeigenschaften bei.

In einer weiteren Ausführungsform eines erfindungsgemäßen Verfahrens zur Herstellung eines Brandschutzmittels kann eine Messung der Dicke der Schicht gegebenenfalls kontinuierlich von und/oder nach dem Trocknen erfolgen. Dadurch kann die Homogenität der Dicke überprüft werden. Daher können optimale Brandschutzeigenschaften und insbesondere ein homogenes Aufschäumen im Brandfall sichergestellt werden.

In einer weiteren bevorzugten Ausführungsform eines erfindungsgemäßen Verfahrens zur Herstellung eines Brandschutzmittels kann eine Lösung verwendet werden, deren Glyceringehalt zum Beispiel unter 6 Gew.-%, bevorzugt zwischen 0,2 Gew.-% und 5 Gew.-%, weiter bevorzugt zwischen 0,5 Gew.-% und 4 Gew.-%, weiter bevorzugt zwischen 1 Gew.-% und 3,5 Gew.-%, besonders bevorzugt zwischen 1,5 Gew.-% und 3 Gew.-%, liegt. Dieser besonders niedrige Glyceringehalt kann dabei überraschend ausreichen, um die zur Herstellung der Brandschutzmittel nötige Viskosität der Lösung und Flexibilität des Brandschutzmittels zu erreichen und wirkt sich dabei zudem ebenfalls sehr positiv auf das Verhalten der Brandschutzmittel im Brandfall aus, da diese im Brandfall weitaus resistenter werden und eine geringere Schwärzung und Blasenbildung aufweisen können.

Bevorzugterweise handelt es sich bei der in einem erfindungsgemäßen Verfahren zur Herstellung eines Brandschutzmittels verwendeten Lösung um eine wässerige Lösung, durch die das Herstellungsverfahren und insbesondere die Abfall-beseitigung vereinfacht werden, Es können jedoch zum Beispiel auch Lösungen auf Alkoholbasis oder Lösungen, welche Mischungen aus Wasser und mindestens einem Alkohol umfassen, verwendet werden. In einer besonderen Ausführungsform der vorliegenden Erfindung kann die Lösung, welche zur Herstellung eines Brandschutzmittels verwendet werden kann, zum Beispiel bis zu 90 Gew.-%, bevorzugt zwischen 25 Gew.-% und 85 Gew.-%, weiter bevorzugt zwischen 35 Gew.-% und 80 Gew.-%, weiter bevorzugt zwischen 45 Gew.-% und 75 Gew.-%, besonders bevorzugt zwischen 55 Gew.-% und 70 Gew.-%, Wasser, mindestens eines Alkoholes oder Mischungen davon umfassen.

In einer weiteren bevorzugten Ausführungsform eines erfindungsgemäßen Verfahrens zur Herstellung eines Brandschutzmittels kann die verwendete Lösung auch mindestens ein Wasserglas umfassen. Dieses Wasserglas kann dabei als intumeszierendes Material dienen. Die Verwendung von Wasserglas als intumeszierendes Material in einem erfindungsgemäßen Brandschutzmittel bietet, insbesondere wenn ein Aufbringen eines erfindungsgemäßen Brandschutzmittels auf ein Glassubstrat, wie beispielsweise eine Glasplatte, gewünscht oder geplant ist, den Vorteil einer hohen Kompatibilität zwischen Glassubstrat und dem als intumeszierendes Material verwendeten Wasserglas. Dadurch kann einer Delamination, welche im Extremfall zum Beispiel bei der Verwendung von Hydrogelen als intumeszierendes Material auftreten kann, vorgebeugt werden.

In einer weiteren bevorzugten Ausführungsform eines erfindungsgemäßen Verfahrens zur Herstellung eines Brandschutzmittels kann der Gehalt an SiO₂ der verwendeten Lösung zum Beispiel zwischen 10 Gew.-% und 60 Gew.-%, bevorzugt zwischen 15 Gew.-% und 50 Gew.-%, weiter bevorzugt zwischen 20 Gew.-% und 40 Gew.-%, weiter bevorzugt zwischen 22 Gew.-% und 35 Gew.-%, besonders bevorzugt zwischen 25 Gew.-% und 30 Gew.-%, liegen. Ein solcher SiO₂-Gehalt ermöglicht es, sowohl eine für das Herstellungsverfahren ausreichende Viskosität der Lösung als auch sehr gute Eigenschaften des Wasserglases als intumeszierendes Material sicherzustellen. Dadurch wird die Herstellung der Brandschutzmittel vereinfacht, da eine ausreichende Viskosität der Lösung sicherstellt, dass die Lösung besonders bei Unachtsamkeiten beziehungsweise kleineren Fehlern während der Produktion allzu einfach über den Ablaufschutzrand und oder den Begrenzungsrahmen hinaus läuft. Zudem können durch einen solchen Siliziumoxidgehalt auch die Eigenschaften des Wasserglases und damit auch die Brandschutzeigenschaften des Brandschutzmittels optimiert werden.

In einer weiteren bevorzugten Ausführungsform eines erfindungsgemäßen Verfahrens zur Herstellung eines Brandschutzmittels kann die verwendete Lösung gegebenenfalls bevorzugterweise mindestens zwei alkalische Oxide umfassen. Dadurch können die Eigenschaften des Wasserglases und damit auch die Brandschutzeigenschaften des Brandschutzmittels weiter optimiert werden. Dabei kann/können das/die alkalische(n) Oxid(e) in einer besonderen Ausführungsform des erfindungsgemäßen Brandschutzmittels aus K₂O und Na₂O und Li₂O ausgewählt werden. Das Einbringen eines Kalium- und/oder Lithiumoxids kann dabei beispielsweise zu einer Verbesserung der Brandschutzeigenschaften durch ein homogeneres Aufschäumen im Brandfall zur Verbesserung der mechanischen Eigenschaften insbesondere der Flexibilität und damit zu einer bequemeren Handhabung sowie zu einer Reduzierung der Trockenzeit führen.

In einer weiteren bevorzugten Ausführungsform eines erfindungsgemäßen Verfahrens zur Herstellung eines Brandschutzmittels kann das Verhältnis von SiO₂ zu Alk₂O in der verwendeten Lösung zum Beispiel zwischen 1:1 und 10:1, bevorzugt zwischen 1,5:1 und 7,5:1, weiter bevorzugt zwischen 2:1 und 6:1, weiter bevorzugt zwischen 2,5:1 und 5:1 besonders bevorzugt zwischen 2,5:1 und 4:1, betragen. Dabei kann sich eine Erhöhung des Verhältnisses von SiO₂ zu Alk₂O positiv auf die Brandschutzeigenschaften auswirken. Dadurch können die Eigenschaften des Wasserglases und damit auch die Brandschutzeigenschaften des Brandschutzmittels weiter optimiert werden.

In einer weiteren bevorzugten Ausführungsform eines erfindungsgemäßen Verfahrens zur Herstellung eines Brandschutzmittels kann ein Verhältnis von Na₂O zu K₂O in der verwendeten Lösung zum Beispiel zwischen 1:1 und 20:1, bevorzugt zwischen 2:1 und 17,5:1, weiter bevorzugt zwischen 2,5:1 und 15:1, weiter bevorzugt zwischen 5:1 und 12,5:1, besonders bevorzugt zwischen 7:1 und 12:1, aufweisen. Das Einbringen von Kaliumoxid kann dabei zu einer Verbesserung der Brandschutzeigenschaften durch ein homogeneres Aufschäumen im Brandfall, zur Verbesserung der mechanischen Eigenschaften insbesondere der Flexibilität und damit zu einer bequemeren Handhabung sowie zu einer Reduzierung der Trockenzeit führen, Eine starke Reduzierung des Verhältnisses von Na₂O zu K₂O kann sich dabei jedoch auch negativ auf die Brandschutzeigenschaften der Brandschutzverglasung auswirken und im Extremfall die Haftung an ein Substrat insbesondere an eine Glasscheibe negativ beeinflussen. Dadurch können die Eigenschaften des Wasserglases und damit auch die Brandschutzeigenschaften des Brandschutzmittels ebenfalls noch weiter optimiert werden.

In einer weiteren bevorzugten Ausführungsform eines erfindungsgemäßen Verfahrens zur Herstellung eines Brandschutzmittels kann der Gehalt an Na₂O in der verwendeten Lösung zum Beispiel zwischen 1 Gew.- % und 20 Gew.-%, bevorzugt zwischen 2,5 Gew.-% und 17,5 Gew.-%, weiter bevorzugt zwischen 5 Gew.-% und 15 Gew.-%, weiter bevorzugt zwischen 6 Gew.-% und 12,5 Gew.-%, besonders bevorzugt zwischen 7 Gew.-% und 12 Gew.-%, liegen. Dadurch können die Eigenschaften des Wasserglases und damit auch die Brandschutzeigenschaften des Brandschutzmittels ebenfalls noch weiter optimiert werden.

In einer weiteren bevorzugten Ausführungsform eines erfindungsgemäßen Verfahrens zur Herstellung eines Brandschutzmittels kann die verwendete Lösung mindestens ein Additiv umfassen. Dabei kann der Additivgehalt zum Beispiel zwischen 0,0001 Gew.-% und 60 Gew.-%, bevorzugt zwischen 2,5 Gew.-% und 50 Gew.-%, weiter bevorzugt zwischen 5 Gew.-% und 40 Gew.-%, weiter bevorzugt zwischen 10 Gew.-% und 30 Gew.-%, besonders bevorzugt zwischen 15 Gew.-% und 20 Gew.-%, betragen. Dabei können dadurch zum Beispiel die Stabilität und insbesondere die UV-Stabilität, die Flexibilität, die Affinität zu einem Substrat und/die Brandschutzeigenschaften verbessert werden.

In einer weiteren bevorzugten Ausführungsform eines erfindungsgemäßen Verfahrens zur Herstellung eines Brandschutzmittels kann das Material für die Folie beziehungsweise bevorzugt die Polymerfolie zum Beispiel ausgewählt werden aus aufgrund ihrer Eigenschaften besonders geeigneten Materialien wie: Polyolefinen, Polyethylen und Polypropylen, Polyethylenterephthalat (PET), Polyestern, Teflon, Mischungen und/oder Copolymeren davon. Die Folie beziehungsweise bevorzugt die Polymerfolie dient während des Herstellungsverfahrens der erfindungsgemäßen Brandschutzmittel und auch danach dazu, die mechanischen Eigenschaften der erfindungsgemäßen Brandschutzmittel zu verbessern und dabei ihre Handhabung zu erleichtern. In der Tat trägt die Folie beziehungsweise bevorzugt die Polymerfolie dazu bei, dass die Brandschutzmittel bei ihrer Herstellung und danach bequem gehandhabt, aufgerollt und gegebenenfalls zugeschnitten werden können, weitestgehend ohne dass es dabei zu einer Beschädigung der Brandschutzmittel kommt. Die Folie beziehungsweise bevorzugt die Polymerfolie sollte dazu selbst gute mechanische Eigenschaften aufweisen und insbesondere ausreichend temperaturstabil, reißfest und flexibel sein.

In einer anderen Ausführungsform des Verfahrens zur Herstellung eines Brandschutzmittels kann die beschichtete Folie beziehungsweise bevorzugt Polymerfolie nach dem Trocknen aufgerollt werden. Dadurch kann die Handhabung der Brandschutzmittel weiter vereinfacht werden.

Des Weiteren kann eine erfindungsgemäße Brandschutzverglasung nach einem erfindungsgemäßen Verfahren zur Herstellung einer Brandschutzverglasung dadurch hergestellt werden, dass
- mindestens ein gegebenenfalls erfindungsgemäßes Brandschutzmittel, welches mindestens ein intumeszierendes Material und mindestens eine Folie beziehungsweise bevorzugt Polymerfolie umfasst, so auf eine Glasscheibe aufgebracht wird, dass das intumeszierende Material auf der Seite der Glasscheibe liegt, wobei die Folie beziehungsweise bevorzugt die Polymerfolie dann auf der von der Glasscheibe abgewandten Seite liegt,
- die Folie beziehungsweise bevorzugt die Polymerfolie nach dem Aufbringen mindestens eines, gegebenenfalls erfindungsgemäßen, Brandschutzmittels auf eine Glasscheibe von diesem Brandschutzmittel abgezogen wird,
- eine weitere Glasscheibe auf mindestens ein gegebenenfalls erfindungsgemäßes Brandschutzmittel, welches auf einer Glasscheibe aufgebracht wurde, gelegt wird, sodass im Querschnitt ein Aufbau entsteht, bei dem mindestens ein, gegebenenfalls erfindungsgemäßes, Brandschutzmittel zwischen zwei Glasscheiben angeordnet wird,
- der Aufbau, bei dem mindestens ein gegebenenfalls erfindungsgemäßes Brandschutzmittel zwischen zwei Glasscheiben angeordnet wird, unter Druck und/oder Hitzeeinwirkung zusammengepresst beziehungsweise laminiert wird.

Durch das Aufbringen eines gegebenenfalls erfindungsgemäßen Brandschutzmittels, welches eine Folie beziehungsweise bevorzugt eine Polymerfolie umfasst, wird die Herstellung einer Brandschutzverglasung vereinfacht, da die Handhabung des Brandschutzmittels sehr schnell und bequem erfolgen kann. Zudem trägt das Abziehen der Folie beziehungsweise bevorzugt der Polymerfolie zur Verbesserung der Brandschutzeigenschaften der Brandschutzverglasung bei, da die Folie beziehungsweise bevorzugt die Polymerfolie bevorzugt eine organische Basis aufweisen kann, die sich bereits bei relativ niedrigen Temperaturen zersetzt beziehungsweise verbrennt und deswegen die Brandschutzeigenschaften der Brandschutzverglasung negativ beeinflussen würde. Durch das Laminieren des Aufbaus, bei dem mindestens ein Brandschutzmittel zwischen zwei Glasscheiben angeordnet wird, entsteht unter Druck und/oder gegebenenfalls unter Hitzeeinwirkung eine feste Verbindung zwischen den Glasscheiben und dem Brandschutzmittel, sodass eine solidarische Brandschutzverglasung entsteht. Dabei kann die zweite Glasplatte zur Reduzierung der Bildung von Luftblasen und/oder Lufteinschlüssen ganz oder teilweise mit Glycerin beschichtet werden. Die Verwendung eines erfindungsgemäßen Brandschutzmittels im erfindungsgemäßen Verfahren zur Herstellung von Brandschutzverglasungen ist besonders bevorzugt, da dadurch besonders gute Brandschutzeigenschaften erreicht werden können.

In einer bevorzugten Ausführungsform des erfindungsgemäßen Verfahrens zur Herstellung einer Brandschutzverglasung kann die Herstellung kontinuierlich erfolgen. Dabei kann das Brandschutzmittel, welches mindestens eine Folie beziehungsweise bevorzugt eine Polymerfolie umfasst, zum Beispiel von einer Rolle abgerollt werden. Dabei kann kontinuierlich im Sinne der Erfindung insbesondere bedeuten, dass das Verfahren insbesondere zum Beispiel auch beim Wechsel der Rolle des Brandschutzmittels, welches mindestens eine Folie beziehungsweise bevorzugt eine Polymerfolie umfasst, weiter laufen kann. Das kann zum Beispiel durch das Vorhandensein eines Puffers, welcher eine ausreichende Länge beziehungsweise Menge des Brandschutzmittels, welches mindestens eine Folie beziehungsweise bevorzugt eine Polymerfolie umfasst, sozusagen aus Vorrat gegebenenfalls unter Spannung enthält und bei einem Rollenwechsel freigibt, damit das Herstellungsverfahren kontinuierlich erfolgen kann. Nach dem Wechsel der Rolle des Brandschutzmittels, welches mindestens eine Folie beziehungsweise bevorzugt eine Polymerfolie umfasst, kann der Puffer dann wieder mit einer ausreichenden Länge beziehungsweise Menge an Brandschutzmitteln, welche mindestens eine Folie beziehungsweise bevorzugt eine Polymerfolie umfassen, gefüllt werden. Ein solcher Puffer kann zum Beispiel auf Distanz zueinander angeordnete Umlaufrollen umfassen, über die das Brandschutzmittel, welches mindestens eine Folie beziehungsweise bevorzugt eine Polymerfolie umfasst, geführt werden kann, wobei sich die Distanz zwischen den Rollen verändern lässt. Dadurch wird eine besonders schnelle und bequeme Herstellung von Brandschutzverglasungen auch bei besonders großen erwünschten Stückzahlen möglich.

In einer besonders bevorzugten Ausführungsform des erfindungsgemäßen Verfahrens zur Herstellung einer Brandschutzverglasung kann nach dem ersten Schritt beziehungsweise nach jedem Aufbringen eines gegebenenfalls erfindungsgemäßen Brandschutzmittels, welches mindestens ein intumeszierendes Material und mindestens eine Folie beziehungsweise bevorzugt eine Polymerfolie umfasst, auf eine Glasscheibe und/oder vor jedem Abziehen einer Folie beziehungsweise bevorzugt einer Polymerfolie ein zusätzlicher Schritt vorgesehen werden, bei dem ein gegebenenfalls erfindungsgemäßes Brandschutzmittel, welches mindestens ein intumeszierendes Material und mindestens eine Folie beziehungsweise bevorzugt eine Polymerfolie umfasst, mit der Glasscheibe, auf der es aufgebracht wurde, unter Druck und/oder Hitzeeinwirkung zusammengepresst beziehungsweise laminiert wird. Dadurch kann die Haftung des Brandschutzmittels an der Glasscheibe verbessert und das Risiko einer Beschädigung beziehungsweise einer Zerstörung des Brandschutzmittels beim Abziehen der Folie beziehungsweise bevorzugt der Polymerfolie, welche zum Beispiel insbesondere durch eine zu starke Haftung an der Folie beziehungsweise bevorzugt der Polymerfolie verursacht werden kann, reduziert werden. Eine solche starke Haftung, welche eine solche zusätzliche Laminierung gegebenenfalls wünschenswert macht, kann dabei insbesondere auftreten, wenn die Folie beziehungsweise bevorzugt die Polymerfolie einer haftfördernden Behandlung unterzogen wurde.

In einer weiteren Ausführungsform eines erfindungsgemäßen Verfahrens zur Herstellung einer Brandschutzverglasung können auch mehrere Brandschutzmittel auf eine Glasscheibe zum Beispiel entweder nebeneinander und/oder überlappend aufgebracht werden. Dabei wird die Folie beziehungsweise bevorzugt die Polymerfolie dann bevorzugterweise von allen Brandschutzmitteln abgezogen. Insbesondere kann es bei der Überlappung von Brandschutzmitteln zum Beispiel nötig sein, dass eine Folie beziehungsweise bevorzugt eine Polymerfolie von einem aufgebrachten Brandschutzmittel bereits abgezogen wird, bevor ein überlappendes Brandschutzmittel aufgebracht wird. Dadurch können auch besonders große Brandschutzverglasungen, welche gegebenenfalls die Abmessungen der Brandschutzmittel übersteigen, bequem gefertigt werden.

Darüber hinaus können auch mehrere Brandschutzmittel übereinander auf eine Glasscheibe aufgebracht werden. Dabei sollte jedoch die Folie beziehungsweise bevorzugt die Polymerfolie des jeweils unten liegenden Brandschutzmittels vor dem Aufbringen eines weiteren Brandschutzmittels abgezogen werden. Dadurch kann die Dicke des intumeszierenden Materials, welches auf die Glasscheibe aufgebracht wird, besonders bequem variiert werden. Zudem können auch besonders große Dicken des intumeszierenden Materials, welches auf die Glasscheibe aufgebracht wird, erreicht werden. Dadurch können die Brandschutzeigenschaften der Brandschutzverglasung weiter verbessert werden.

In einer weiteren Ausführungsform eines erfindungsgemäßen Verfahrens zur Herstellung einer Brandschutzverglasung kann auch mindestens ein Brandschutzmittel auf die weitere beziehungsweise zweite Glasscheibe aufgebracht werden. Sollten mehrere Brandschutzmittel auf die weitere beziehungsweise zweite Glasscheibe aufgebracht werden, können diese zum Beispiel insbesondere nebeneinander, überlappend oder übereinander aufgebracht werden. Dadurch kann die Dicke des intumeszierenden Materials, welches auf die Glasscheibe aufgebracht wird, ebenfalls besonders bequem variiert werden. Zudem können auch besonders große Dicken des intumeszierenden Materials, welches auf die Glasscheibe aufgebracht wird, erreicht werden. Dadurch können die Brandschutzeigenschaften der Brandschutzverglasung ebenfalls weiter verbessert werden. Bevorzugterweise werden dabei zum Beispiel Glasscheiben aus Floatglas verwendet. Es können jedoch auch ESG-Scheiben verwendet werden.

In einer besonderen Ausführungsform eines erfindungsgemäßen Verfahrens zur Herstellung einer Brandschutzverglasung kann ein erfindungsgemäßes Brandschutzmittel, welches mindestens ein intumeszierendes Material und mindestens eine Folie beziehungsweise bevorzugt eine Polymerfolie umfasst, vor dem Aufbringen auf eine Glasscheibe auf eine bestimmte Größe zugeschnitten werden. Dadurch ist es möglich Brandschutzverglasungen in verschiedenen Größen zu fertigen und die Abmessungen der Brandschutzmittel bequem an die jeweilig benötigte Größe anzupassen.

Die vorliegende Erfindung betrifft auch eine Vorrichtung zur Herstellung eines Brandschutzmittels, welches mindestens ein Transportmittel für eine Folie beziehungsweise bevorzugt eine Polymerfolie, mindestens ein Mittel zur Beschichtung einer Folie beziehungsweise bevorzugt einer Polymerfolie mit einer Lösung und mindestens einen Abschnitt mit mindestens einem Mittel zum Trocknen der beschichteten Folie beziehungsweise bevorzugt Polymerfolie umfasst. Ein Transportmittel für eine Folie beziehungsweise bevorzugt eine Polymerfolie kann dabei zum Beispiel mindestens eine Rolle insbesondere Umlaufrolle beziehungsweise Führungsrolle und/oder mindestens eine Transportschiene, insbesondere eine Transportschiene, in der eine Folie beziehungsweise bevorzugt eine Polymerfolie eingespannt werden kann und/oder mindestens eine Führungsschiene und/oder ein Transportband beziehungsweise Förderband und/oder einen Saugnapf und/oder mindestens eine Transportklammer und/oder ein ähnliches Mittel zum Transport der Folie beziehungsweise bevorzugt der Polymerfolie umfassen. Ein Mittel zur Beschichtung der Folie beziehungsweise bevorzugt der Polymerfolie kann dabei zum Beispiel mindestens eine Düse insbesondere eine Auslaufdüse für die Lösung und/oder mindestens eine Sprühdüse und/oder mindestens eine Pumpe zum Ansaugen der Lösung und/oder mindestens eine Rinne und/oder einen Schlauch zum Führen der Lösung und/oder ein ähnliches Mittel zum Transport der Folie beziehungsweise bevorzugt der Polymerfolie umfassen. Ein Mittel zum Trocknen der beschichteten Folie beziehungsweise bevorzugt Polymerfolie kann dabei zum Beispiel mindestens eine Hitzequelle, zum Beispiel ein Heizelement insbesondere eine Warmluftquelle und/oder mindestens eine Pumpe zum Erzeugen von Unterdruck und/oder zum Luftabzug und/oder einen Kondensator zur Reduzierung der Luftfeuchtigkeit und/oder mindestens ein Mittel zum Erzeugen einer Luftströmung zum Beispiel zum Trocknen durch Umluft insbesondere einen Propeller und/oder eine Düse und/oder ein ähnliches Mittel zum Trocknen aufweisen. Dadurch kann ein kontinuierlicher Transport der Folie beziehungsweise bevorzugt der Polymerfolie, eine kontinuierliche Beschichtung und eine kontinuierliche Trocknung erfolgen. Daher wird eine besonders schnelle und bequeme Herstellung von Brandschutzmitteln auch bei besonders großen erwünschten Stückzahlen möglich.

In einer bevorzugten Ausführungsform kann die erfindungsgemäße Vorrichtung zur Herstellung eines Brandschutzmittels auch mindestens einen Puffer für die Folie beziehungsweise bevorzugt die Polymerfolie umfassen. Ein solcher Puffer kann zum Beispiel auf Distanz zueinander angeordnete Umlaufrollen umfassen, über die die Folie beziehungsweise bevorzugt die Polymerfolie geführt werden kann, wobei sich die Distanz zwischen den Rollen verändern lässt. Dadurch ist es möglich, eine kontinuierliche Produktion auch beim Wechsel der Rolle der Folie beziehungsweise bevorzugt der Polymerfolie sicherzustellen. Daher wird eine besonders schnelle und bequeme Herstellung von Brandschutzmitteln auch bei besonders großen erwünschten Stückzahlen möglich.

In einer bevorzugten Ausführungsform kann die erfindungsgemäße Vorrichtung zur Herstellung eines Brandschutzmittels auch mindestens ein Mittel zum Durchführen einer haftfördernden Behandlung insbesondere Corona-Behandlung umfassen. Ein Mittel zum Durchführen einer haftfördernden Behandlung kann dabei insbesondere mindestens eine geerdete Rolle, beziehungsweise Walze, über die Folie beziehungsweise bevorzugt die Polymerfolie geführt werden kann und mindestens eine gegenüber dieser Rolle angeordnete Elektrode insbesondere eine Sprühelektrode umfassen. Dadurch lässt sich die Haftung der Lösung an der Folie beziehungsweise bevorzugt an der Polymerfolie verbessern und der Ausschuss, welcher durch ein Ablaufen der Lösung verursacht werden kann, reduzieren. Daher wird eine besonders schnelle und bequeme Herstellung von Brandschutzmitteln auch bei besonders großen erwünschten Stückzahlen möglich.

In einer bevorzugten Ausführungsform kann die erfindungsgemäße Vorrichtung zur Herstellung eines Brandschutzmittels mindestens ein Mittel zur gegebenenfalls kontinuierlichen Kontrolle der Dicke der Schicht umfassen. Dieses Mittel kann zum Beispiel ein fest oder versetzbar angeordnetes rakelähnliches Teil umfassen, welches den eventuell bei der Beschichtung aufgetragenen Überschuss der Lösung zurückhält beziehungsweise weitgehend gleichmäßig verteilt. Dabei wird das rakelähnliche Teil so über der Folie beziehungsweise bevorzugt der Polymerfolie angebracht, dass die Höhe des rakelähnlichen Teils die Dicke der Schicht bestimmen kann, da die Schicht lediglich den Spalt zwischen der Folie beziehungsweise bevorzugt der Polymerfolie und dem rakelähnlichen Teil ausfüllen kann. Dadurch kann die Dicke der Schicht gegebenenfalls kontinuierlich kontrolliert beziehungsweise variiert werden. Das rakelähnliche Teil ermöglicht es dabei, eine sehr homogene Schichtdichte zu erreichen. Dadurch können die Brandschutzeigenschaften der Brandschutzmittel optimiert werden. Ein weiteres Mittel zur gegebenenfalls kontinuierlichen Kontrolle der Dicke der Schicht kann zum Beispiel eine Düse und/oder ein Ventil zur kontrollierten Abgabe einer bestimmten Menge der Lösung umfassen.

In einer bevorzugten Ausführungsform kann die erfindungsgemäße Vorrichtung zur Herstellung eines Brandschutzmittels mindestens ein Mittel zur Kontrolle der Atmosphäre in mindestens einem Abschnitt zum Trocknen der beschichteten Folie beziehungsweise bevorzugt Polymerfolie umfassen. Bei diesem Mittel kann es sich zum Beispiel um einen Vorrat an einem inerten Gas handeln, welches zum Beispiel über Ventile und/oder Düsen gegebenenfalls automatisch eingebracht werden kann, um die Zusammensetzung der Atmosphäre an eine ausgewählte Zusammensetzung anzupassen. Darüber hinaus kann es sich dabei beispielsweise auch um einen Kondensator zum Kondensieren der Luftfeuchtigkeit handeln. Dadurch können die Brandschutzeigenschaften der Brandschutzmittel optimiert werden.

In einer bevorzugten Ausführungsform kann die erfindungsgemäße Vorrichtung zur Herstellung eines Brandschutzmittels mindestens ein Mittel zum Messen der Dicke der Schicht aufweisen. Dabei kann es sich zum Beispiel um ein Mittel handeln, bei dem die Dicke der Schicht gegebenenfalls kontinuierlich durch das Aussenden einer Strahlung und die Messung der reflektierten Strahlung beziehungsweise des reflektierten Signals ermittelt wird.

Die vorliegende Erfindung umfasst auch eine Vorrichtung zur Herstellung einer Brandschutzverglasung, welche mindestens ein Transportmittel für ein Brandschutzmittel, welches eine Folie beziehungsweise bevorzugt eine Polymerfolie umfasst, mindestens ein Transportmittel für eine Glasscheibe, mindestens ein Mittel zum Aufbringen mindestens eines Brandschutzmittels, welches eine Folie beziehungsweise bevorzugt eine Polymerfolie umfasst, auf eine Glasscheibe, mindestens ein Mittel zum Abziehen mindestens einer Folie beziehungsweise bevorzugt einer Polymerfolie und mindestens ein Mittel zum Laminieren. Ein Transportmittel für ein Brandschutzmittel, welches eine Folie beziehungsweise bevorzugt eine Polymerfolie umfasst, kann dabei zum Beispiel mindestens eine Rolle insbesondere Umlaufrolle beiziehungsweise Führungsrolle und/oder mindestens eine Transportschiene insbesondere eine Schiene aufweisen, in der ein Brandschutzmittel, welches eine Folie beziehungsweise bevorzugt eine Polymerfolie umfasst, eingespannt werden kann und/oder mindestens eine Führungsschiene und/oder ein Transportband beziehungsweise Förderband
und/oder einen Saugnapf und/oder eine Transportklammer und/oder ein ähnliches Mittel zum Transport des Brandschutzmittels, welches eine Folie beziehungsweise bevorzugt eine Polymerfolie umfasst. Ein Transportmittel für eine Glasscheibe kann dabei zum Beispiel ebenfalls mindestens eine Rolle, insbesondere Umlaufrolle beziehungsweise Führungsrolle und/oder mindestens eine Transportschiene, insbesondere eine Schiene, in der eine Glasscheibe eingespannt werden kann, und/oder mindestens eine Führungsschiene und/oder ein Transportband beziehungsweise Förderband und/oder einen Saugnapf und/oder mindestens eine Transportklammer und/oder ein ähnliches Mittel zum Transport der Glasscheibe umfassen. Ein Mittel zum Aufbringen des Brandschutzmittels, welches eine Folie beziehungsweise bevorzugt eine Polymerfolie umfasst, kann dabei zum Beispiel mindestens eine Rolle insbesondere Umlaufrolle beziehungsweise Führungsrolle und/oder mindestens eine Transportschiene insbesondere eine Schiene aufweisen, in der eine Folie beziehungsweise bevorzugt eine Polymerfolie eingespannt werden kann und/oder mindestens eine Führungsschiene und/oder ein Transportband beziehungsweise Förderband und/oder einen Saugnapf und/oder mindestens eine Transportklammer und/oder ein ähnliches Mittel, welches das Brandschutzmittel, welches eine Folie beziehungsweise bevorzugt eine Polymerfolie umfasst, bevorzugt auf oder neben einer Glasscheibe zum Aufbringen eines Brandschutzmittels, welches eine Folie beziehungsweise bevorzugt eine Polymerfolie umfasst, anordnet. Ein Mittel zum Abziehen einer Folie beziehungsweise bevorzugt einer Polymerfolie kann dabei zum Beispiel mindestens eine Rolle, insbesondere Umlaufrolle beziehungsweise Führungsrolle, über die Luft angesaugt wird, so dass ein Unterdruck entsteht, und/oder mindestens eine Transportschiene, insbesondere eine Schiene, in der eine Folie beziehungsweise bevorzugt eine Polymerfolie eingespannt werden kann und/oder mindestens eine Führungsschiene und/oder mindestens einen Saugnapf insbesondere eine Schiene mit Saugnäpfen und/oder mindestens eine Klammer und/oder mindestens eine Leiste und/oder Schiene über die Luft abgesaugt wird, sodass ein Unterdruck entsteht, und/oder ein ähnliches Mittel zum Abziehen einer Folie beziehungsweise bevorzugt einer Polymerfolie umfassen, welches eine Zugkraft auf die Folie beziehungsweise bevorzugt die Polymerfolie zum Entfernen dieser Folie ausüben kann. Dabei kann/können das/die Mittel zum Aufbringen eines Brandschutzmittels, welches eine Folie beziehungsweise bevorzugt eine Polymerfolie umfasst, und/oder das/die Mittel zum Abziehen einer Folie beziehungsweise bevorzugt einer Polymerfolie mit dem/den Mittel(n) zum Transport eines Brandschutzmittels, welches eine Folie beziehungsweise bevorzugt eine Polymerfolie umfasst, und/oder mit dem/den Mittel(n) zum Transport einer Glasscheibe gegebenenfalls ganz und/oder zumindest teilweise identisch sein. Ein Mittel zum Laminieren kann dabei zum Beispiel insbesondere mindestens zwei Rollen beziehungsweise Walzen und/oder Pressblöcke umfassen, welche einander gegenüber angeordnet sind und sich mit Druck und/oder unter Hitzeeinwirkung aufeinander zubewegen lassen. Dadurch kann eine kontinuierliche Herstellung der Brandschutzverglasung erfolgen. Daher wird eine besonders schnelle und bequeme Herstellung von Brandschutzmitteln auch bei besonders großen erwünschten Stückzahlen möglich.

In einer bevorzugten Ausführungsform kann die erfindungsgemäße Vorrichtung zur Herstellung einer Brandschutzverglasung auch mindestens einen Puffer für ein Brandschutzmittel, welches eine Folie beziehungsweise bevorzugt eine Polymerfolie umfasst, aufweisen. Ein solcher Puffer kann zum Beispiel auf Distanz zueinander angeordnete Umlaufrollen umfassen, über die ein Brandschutzmittel, welches eine Folie beziehungsweise bevorzugt eine Polymerfolie umfasst, geführt werden kann, wobei sich die Distanz zwischen den Rollen verändern lässt. Dadurch ist es möglich, eine kontinuierliche Produktion auch beim Wechsel der Rolle des Brandschutzmittels, welches eine Folie beziehungsweise bevorzugt eine Polymerfolie umfasst, sicherzustellen. Daher wird eine besonders schnelle und bequeme Herstellung von Brandschutzverglasungen auch bei besonders großen erwünschten Stückzahlen möglich,

In einer bevorzugten Ausführungsform kann die erfindungsgemäße Vorrichtung zur Herstellung einer Brandschutzverglasung gegebenenfalls mindestens zwei Mittel zum Laminieren umfassen, wobei das erste Mittel zum Laminieren nach mindestens einem Mittel zum Aufbringen eines Brandschutzmittels, welches eine Folie beziehungsweise bevorzugt eine Polymerfolie umfasst, angeordnet und von einer Glasscheibe mit mindestens einem aufgebrachten Brandschutzmittel, welches eine Folie beziehungsweise bevorzugt eine Polymerfolie umfasst, durchlaufen werden kann. Dadurch kann ein Laminieren des Brandschutzmittels, welches eine Folie beziehungsweise bevorzugt eine Polymerfolie umfasst, mit der Glasscheibe vor dem Abziehen der Folie beziehungsweise bevorzugt der Polymerfolie die Haftung zwischen Glasscheibe und Brandschutzmittel verbessern. Dadurch lässt sich das Risiko einer Beschädigung beziehungsweise einer Zerstörung des Brandschutzmittels beim Abziehen der Folie beziehungsweise bevorzugt der Polymerfolie minimieren. Dadurch kann der Ausschuss beim Herstellen der Brandschutzverglasung reduziert werden.

In einer bevorzugten Ausführungsform kann die erfindungsgemäße Vorrichtung zur Herstellung einer Brandschutzverglasung gegebenenfalls mindestens eine Station mit mindestens einem Mittel zum Zurechtschneiden der Brandschutzmittel, welche eine Folie beziehungsweise bevorzugt eine Polymerfolie umfassen, aufweisen. Diese Mittel zum Zurechtschneiden der Brandschutzmittel können dabei zum Beispiel mindestens eine Klinge insbesondere rotierend und/oder vibrierend und/oder mindestens ein Messer insbesondere rotierend und/oder vibrierend und/oder mindestens ein Sägeblatt insbesondere rotierend und/oder vibrierend und/oder mindestens einen Schneidedraht insbesondere erhitzt und/oder vibrierend umfassen. Dadurch können bequem und schnell Brandschutzverglasungen mit unterschiedlichen Abmessungen hergestellt werden.

Schließlich betrifft die vorliegende Erfindung auch eine erfindungsgemäße Brandschutzverglasung, welche einen Aufbau aufweist, bei dem eine Lage und besonders bevorzugt eine einzige Lage eines gegebenenfalls erfindungsgemäßen Brandschutzmittels zwischen zwei Glasscheiben angeordnet ist, wobei die Brandschutzverglasung, wenn sie zum Beispiel zwischen 10 Minuten und 75 Minuten, bevorzugt zwischen 30 Minuten und 60 Minuten, einseitig einer Temperaturkurve ausgesetzt wird, welche der Gleichung T= 345 log (8t+1) +20, die in den europäischen Normen EN 1363 und EN 1364 zum Testen von Brandschutzverglasung beschrieben wird (wobei T die mittlere Temperatur in °C und t die Zeit in Minuten darstellt), entspricht, zu jedem Zeitpunkt nur eine Wärmeabstrahlung von zum Beispiel weniger als 25 kW/m², bevorzugt weniger als 20 kW/m², weiter bevorzugt weniger als 15 kW/m², weiter bevorzugt weniger als 10 kW/m², weiter bevorzugt weniger als 7 kW/m², weiter bevorzugt weniger als 6 kW/m², weiter bevorzugt weniger als 5 kW/m², weiter bevorzugt weniger als 4 kW/m², besonders bevorzugt weniger als 3 kW/m², gegebenenfalls zur der der Temperaturkurve ausgesetzten Seite gegenüberliegenden Seite der Brandschutzverglasung abgibt. Dadurch ist es insbesondere möglich, sehr dünne und leichte Brandschutzverglasungen mit hervorragenden Brandschutzeigenschaften zu erhalten. Gegebenenfalls kann dabei auch ein den Vorgaben der europäischen Normen EN 1363 und EN 1364 entsprechender Druck auf die Verglasung ausgeübt werden. Dabei wird nach 30 Minuten eine Temperatur von 842 °C und nach 60 Minuten eine Temperatur von 945°C erreicht.

In einer bevorzugten Ausführungsform der erfindungsgemäßen Brandschutzverglasung kann die Brandschutzverglasung besonders bevorzugt lediglich zwei Glasscheiben umfassen.

In einer bevorzugten Ausführungsform der erfindungsgemäßen Brandschutzverglasung kann die Brandschutzverglasung, wenn sie zum Beispiel zwischen 20 Minuten und 75 Minuten, bevorzugt zwischen 30 Minuten und 60 Minuten, einseitig einer Temperaturkurve ausgesetzt wird, welche der Gleichung T= 345 log (8t+1) +20, die in den europäischen Normen EN 1363 und EN 1364 zum Testen von Brandschutzverglasung beschrieben wird (wobei T die mittlere Temperatur in °C und t die Zeit in Minuten darstellt), entspricht, nahezu keinen Bruch oder Riss der Glasscheiben aufweisen. Gegebenenfalls kann dabei auch ein den Vorgaben der europäischen Normen EN 1363 und EN 1364 entsprechender Druck auf die Verglasung ausgeübt werden. Dies ist dank eines homogenen Aufschäumens des gegebenenfalls erfindungsgemäßen und/oder nach einem erfindungsgemäßen Verfahren zum Herstellen von Brandschutzmittel hergestellten Brandschutzmittels möglich, da der Druckaufbau beim Aufschäumen sehr gleichmäßig erfolgt. Dabei trägt wahrscheinlich insbesondere die nahezu intakte Glasscheibe, wie ein zusätzlicher Hitzeschild, zur Verbesserung der Brandschutzeigenschaften bei.

In einer weiteren Ausführungsform der erfindungsgemäßen Brandschutzverglasung kann die gegebenenfalls einzige Lage eines Brandschutzmittels zum Beispiel eine durchschnittliche Dicke von 0,1 mm bis 2 mm, bevorzugt zwischen 0,2 mm bis 1 mm, weiter bevorzugt zwischen 0,3 mm bis 0,9 mm, weiter bevorzugt zwischen 0,4 mm bis 0,8 mm, besonders bevorzugt zwischen 0,5 mm bis 0,7 mm, aufweisen. Dadurch ist es insbesondere möglich, sehr dünne und leichte Brandschutzverglasungen mit hervorragenden Brandschutzeigenschaften zu erhalten.

Die Toleranz für die Dicke beziehungsweise die durchschnittliche Dicke der gegebenenfalls einzigen Lage eines Brandschutzmittels, welche mindestens ein intumeszierendes Material umfasst, kann dabei in einer bevorzugten Ausführungsform des erfindungsgemäßen Verfahrens zur Herstellung eines Brandschutzmittels zum Beispiel zwischen 1 % und 30%, bevorzugt zwischen 5 % und 25%, bevorzugt zwischen 7% und 20%, besonders bevorzugt zwischen 10% und 15 % liegen. Daher sollte die Dicke beziehungsweise die durchschnittliche Dicke der gegebenenfalls einzigen Lage eines Brandschutzmittels, welche mindestens ein intumeszierendes Material umfasst, bevorzugt über die gesamte Fläche der gegebenenfalls einzigen Lage eines Brandschutzmittels, welche mindestens ein intumeszierendes Material umfasst, nicht um mehr als zum Beispiel zwischen 5% und 25% bevorzugt zwischen 7% und 20%, besonders bevorzugt zwischen 10% und 15 % der gewünschten Dicke der gegebenenfalls einzigen Lage eines Brandschutzmittels, welche mindestens ein intumeszierendes Material umfasst, abweichen. Dabei kann die Dicke zur Einhaltung der Toleranz gegebenenfalls kontinuierlich und/oder gegebenenfalls über die gesamte Breite der gegebenenfalls einzigen Lage eines Brandschutzmittels, welche mindestens ein intumeszierendes Material umfasst, überwacht beziehungsweise gemessen werden und/oder mehrmals und/oder an verschiedenen Orten der gegebenenfalls einzigen Lage eines Brandschutzmittels, welche mindestens ein intumeszierendes Material umfasst, überwacht beziehungsweise gemessen werden, wobei aus mindestens zwei Messungen eine durchschnittliche Dicke errechnet wird. Dadurch lässt sich gegebenenfalls auch unabhängig der übrigen Merkmale der Brandschutzverglasung eine sehr gute Homogenität der Dicke der gegebenenfalls einzigen Lage eines Brandschutzmittels, welche mindestens ein intumeszierendes Material umfasst, sicherstellen. Die Homogenität der Dicke ist dabei mit zunehmender Dicke einfacher zu erreichen. Dadurch kann ein sehr homogenes Aufschäumen der Brandschutzmittel im Brandfall erreicht und ein Bruch einer Glasscheibe, neben die ein Brandschutzmittel möglicherweise angeordnet wurde, durch einen gleichmäßigen Druckaufbau beim Aufschäumen im Brandfall weitestgehend vermieden werden. Daher können optimale Brandschutzeigenschaften und insbesondere ein homogenes Aufschäumen im Brandfall sichergestellt werden. Dabei trägt wahrscheinlich insbesondere die nahezu intakte Glasscheibe, wie ein zusätzlicher Hitzeschild zur Verbesserung der Brandschutzeigenschaften bei.

In einer weiteren Ausführungsform der Brandschutzverglasung kann sie bevorzugt zum Beispiel ein Brandschutzmittel enthalten, das mit einer Vorrichtung hergestellt wurde, welche ein rakelähnliches Teil zur gegebenenfalls kontinuierlichen Kontrolle der Dicke einer Schicht der Folie beziehungsweise bevorzugt der Polymerfolie mit einer Lösung, die zum Herstellen der Brandschutzmittel verwendet wird, aufweist. Daher können optimale Brandschutzeigenschaften und insbesondere ein homogenes Aufschäumen im Brandfall sichergestellt werden.

In einer weiteren Ausführungsform der erfindungsgemäßen Brandschutzverglasung kann der Verbund aus einem gegebenenfalls einzigen Brandschutzmittel mit den zwei Glasscheiben zum Beispiel eine durchschnittliche Dicke von 2 mm bis 20 mm, bevorzugt zwischen 3 mm bis 15 mm, weiter bevorzugt zwischen 3,5 mm bis 12 mm, weiter bevorzugt zwischen 4 mm bis 10 mm, besonders bevorzugt zwischen 5 mm bis 9 mm, aufweisen. Dadurch ist es insbesondere möglich, sehr dünne und leichte Brandschutzverglasungen mit hervorragenden Brandschutzeigenschaften zu erhalten.

Bevorzugterweise kann eine erfindungsgemäße Brandschutzverglasung mindestens ein erfindungsgemäßes Brandschutzmittel umfassen, da dadurch besonders gute Brandschutzeigenschaften erreicht werden können, Insbesondere kann eine erfindungsgemäße Brandschutzverglasung dabei alle Vorteile beziehungsweise Merkmale der erfindungsgemäßen Brandschutzmittel aufweisen,

Zudem kann eine erfindungsgemäße Brandschutzverglasung bevorzugt mindestens ein nach einem erfindungsgemäßen Verfahren zur Herstellung von Brandschutzmitteln hergestellten Brandschutzmittel umfassen, da dadurch weiter verbesserte Brandschutzeigenschaften erreicht werden können. Insbesondere kann eine erfindungsgemäße Brandschutzverglasung dabei alle Vorteile beziehungsweise Merkmale des erfindungsgemäßen Verfahrens zur Herstellung von Brandschutzmitteln aufweisen.

In einer besonders bevorzugten Ausführungsform der erfindungsgemäßen Brandschutzverglasung kann eine erfindungsgemäße Brandschutzverglasung mindestens ein erfindungsgemäßes Brandschutzmittel, welche nach einem erfindungsgemäßen Verfahren zur Herstellung von Brandschutzmitteln hergestellt wurde, umfassen. Dadurch können weiter verbesserte Brandschutzeigenschaften erreicht werden. Insbesondere kann eine erfindungsgemäße Brandschutzverglasung dabei alle Vorteile beziehungsweise Merkmale des erfindungsgemäßen Verfahrens zur Herstellung von Brandschutzmitteln und der erfindungsgemäßen Brandschutzmittel aufweisen.

Schließlich kann eine erfindungsgemäße Brandschutzverglasung bevorzugterweise durch ein erfindungsgemäßes Verfahren zur Herstellung von Brandschutzverglasungen hergestellt werden. Dabei kann bevorzugterweise ein erfindungsgemäßes Brandschutzmittel und/oder ein Brandschutzmittel, welches gegebenenfalls bevorzugterweise nach einem erfindungsgemäßen Verfahren zur Herstellung von Brandschutzmitteln hergestellt wurde, verwendet werden. Besonders bevorzugt kann eine erfindungsgemäße Brandschutzverglasung dabei mindestens ein erfindungsgemäßes Brandschutzmittel, welches nach einem erfindungsgemäßen Verfahren zur Herstellung von Brandschutzmitteln hergestellt wurde, umfassen. Dadurch können weiter verbesserte Brandschutzeigenschaften erreicht werden. Insbesondere kann eine erfindungsgemäße Brandschutzverglasung dabei alle Vorteile beziehungsweise Merkmale des erfindungsgemäßen Verfahrens zur Herstellung von Brandschutzmitteln, der erfindungsgemäßen Brandschutzmittel und des erfindungsgemäßen Verfahrens zur Herstellung einer Brandschutzverglasung aufweisen.

Ausführungsbeispiele und Vergleichsversuche:

### Ausführungsbeispiel 1:

Eine 7 mm dicke Brandschutzverglasung aus einem einzigen 0,7 mm dicken erfindungsgemäßen Brandschutzmittel, umfassend ein Wasserglas mit Wassergehalt von 21 Gew.-%, einem Verhältnis von SiO₂:AlkO₂ von 3:1, und einem Verhältnis von NaO₂:KO₂ von 12:1, welches nach einem erfindungsgemäßen Verfahren zur Herstellung von Brandschutzmitteln mit einer Lösung mit einem Glyceringehalt von 1,5 Gew-% hergestellt und dabei in einer sauerstoffarmen Atmosphäre getrocknet wurde, und zwei Glasscheiben aus Floatglas wird in einen Stahlrahmen eingespannt und 10 Minuten lang einseitig einer Temperaturkurve ausgesetzt, welche der Gleichung T= 345 log (8t+1) +20, entspricht, die in den europäischen Normen EN 1363 und EN 1364 zum Testen von Brandschutzverglasung beschrieben wird (wobei T die mittlere Temperatur in °C und t die Zeit in Minuten darstellt). Gegebenenfalls kann dabei auch ein den Vorgaben der europäischen Normen EN 1363 und EN 1364 entsprechender Druck auf die Verglasung ausgeübt werden. Dabei wurde die Brandschutzverglasung nach dem erfindungsgemäßen Verfahren zur Herstellung von Brandschutzverglasungen hergestellt. Es wird ein homogenes Aufschäumen, keine Rauchentwicklung, keine Schwärzung und kein Bruch einer der Glasscheiben beobachtet. Nach 10 Minuten wird dabei eine Temperatur von 678 °C erreicht. Die Wärmeabstrahlung zu der der Temperaturkurve ausgesetzten Seite gegenüberliegenden Seite der Brandschutzverglasung beträgt dabei weniger als 0,6 KW/m².

Auch wenn die Brandschutzverglasung der Temperaturkurve, welche der Gleichung T= 345 log (8t+1) +20, entspricht, die in den europäischen Normen EN 1363 und EN 1364 zum Testen von Brandschutzverglasung beschrieben wird (wobei T die mittlere Temperatur in °C und t die Zeit in Minuten darstellt), 35 Minuten lang ausgesetzt wird, wird keine Rauchentwicklung, nur eine sehr geringe Schwärzung und kein Bruch einer der Glasscheiben beobachtet. Die Wärmeabstrahlung zu der der Temperaturkurve ausgesetzten Seite gegenüberliegenden Seite der Brandschutzverglasung beträgt dabei weniger als 5 KW/m²,

Dabei trägt wahrscheinlich insbesondere die nahezu intakte Glasscheibe wie ein zusätzlicher Hitzeschild zur Verbesserung der Brandschutzeigenschaften bei.

### Ausführungsbeispiel 2:

Eine 9 mm dicke Brandschutzverglasung aus einem einzigen 0,5 mm dicken erfindungsgemäßen Brandschutzmittel, umfassend ein Wasserglas mit Wassergehalt von 23 Gew.-%, einem Verhältnis von SiO₂:AlkO₂ von 3,6:1, und einem Verhältnis von NaO₂:KO₂ von 8:1, welches nach einem erfindungsgemäßen Verfahren zur Herstellung von Brandschutzmitteln mit einer Lösung mit einem Glyceringehalt von 3 Gew-% hergestellt und dabei in einer sauerstoffarmen Atmosphäre getrocknet wurde, und zwei Glasscheiben aus Floatglas wird in einen Stahlrahmen eingespannt und 20 Minuten lang einer Temperaturkurve ausgesetzt, welche der Gleichung T= 345 log (8t+1) +20, entspricht, die in den europäischen Normen EN 1363 und EN 1364 zum Testen von Brandschutzverglasung beschrieben wird (wobei T die mittlere Temperatur in °C und t die Zeit in Minuten darstellt). Gegebenenfalls kann dabei auch ein den Vorgaben der europäischen Normen EN 1363 und EN 1364 entsprechender Druck auf die Verglasung ausgeübt werden. Dabei wurde die Brandschutzverglasung nach dem erfindungsgemäßen Verfahren zur Herstellung von Brandschutzverglasungen hergestellt. Es wird ein homogenes Aufschäumen, keine Rauchentwicklung, keine Schwärzung und kein Bruch einer der Glasscheiben beobachtet. Nach 20 Minuten wird dabei eine Temperatur von 781 °C erreicht. Die Wärmeabstrahlung zu der der Temperaturkurve ausgesetzten Seite gegenüberliegenden Seite der Brandschutzverglasung beträgt dabei weniger als 2,5 KW/m².

Auch wenn die Brandschutzverglasung der Temperaturkurve, welche der Gleichung T= 345 log (8t+1) +20, entspricht, die in den europäischen Normen EN 1363 und EN 1364 zum Testen von Brandschutzverglasung beschrieben wird (wobei T die mittlere Temperatur in °C und t die Zeit in Minuten darstellt), 75 Minuten lang ausgesetzt wird, wird keine Rauchentwicklung, nur eine sehr geringe Schwärzung und kein Bruch einer Glasscheibe beobachtet. Die Wärmeabstrahlung zu der der Temperaturkurve ausgesetzten Seite gegenüberliegenden Seite der Brandschutzverglasung beträgt dabei weniger als 9,5 KW/m².

Dabei trägt wahrscheinlich insbesondere die nahezu intakte Glasscheibe, wie ein zusätzlicher Hitzeschild zur Verbesserung der Brandschutzeigenschaften bei.

### Vergleichsversuch 1

Eine 7 mm dicke Brandschutzverglasung aus einem einzigen 0,5 mm dicken Brandschutzmittel, umfassend ein Wasserglas mit Wassergehalt von 21 Gew-%, einem Verhältnis von SiO₂:AlkO₂ von 3:1, und einem Verhältnis von NaO₂:KO₂ von 12:1, welches durch ein Aufgussverfahren mit einer Lösung mit einem Glyceringehalt von 6 Gew.-% auf einer Floatglasscheibe bei nachfolgender Trocknung im Ofen hergestellt wurde, und zwei Floatglasscheiben wird in einen Stahlrahmen eingespannt und 10 Minuten lang einer Temperaturkurve ausgesetzt, welche der Gleichung T= 345 log (8t+1) +20, entspricht, die in den europäischen Normen EN 1363 und EN 1364 zum Testen von Brandschutzverglasung beschrieben wird (wobei T die mittlere Temperatur in °C und t die Zeit in Minuten darstellt). Gegebenenfalls kann dabei auch ein den Vorgaben der europäischen Normen EN 1363 und EN 1364 entsprechender Druck auf die Verglasung ausgeübt werden. Dabei wurde die Brandschutzverglasung durch die Laminierung der Glasscheibe, welche das Brandschutzmittel aufweist, mit einer zweiten Glasscheibe hergestellt. Es wird ein heterogenes Aufschäumen, eine starke Rauchentwicklung, eine deutliche Schwärzung und ein Bruch einer der Glasscheiben beobachtet. Die Wärmeabstrahlung zu der der Temperaturkurve ausgesetzten Seite gegenüberliegenden Seite der Brandschutzverglasung beträgt dabei deutlich über 0,6 KW/m².

### Vergleichsversuch 2:

Eine 7 mm dicke Brandschutzverglasung der Marke Pilkington Pyrodur EW30 wird in einen Stahlrahmen eingespannt und 20 Minuten lang einer Temperaturkurve ausgesetzt, welche der Gleichung T= 345 log (8t+1) +20 entspricht, die in den europäischen Normen EN 1363 und EN 1364 zum Testen von Brandschutzverglasung beschrieben wird (wobei T die mittlere,Temperatur in °C und t die Zeit in Minuten darstellt). Gegebenenfalls kann dabei auch ein den Vorgaben der europäischen Normen EN 1363 und EN 1364 entsprechender Druck auf die Verglasung ausgeübt werden. Es wird ein heterogenes Aufschäumen, eine starke Rauchentwicklung, eine sehr deutliche Schwärzung und ein Bruch einer der Glasscheiben in sehr viele Einzelteile beobachtet. Die Brandschutzeigenschaften sind dabei insbesondere wegen einer höheren Wärmeabstrahlung zu der der Temperaturkurve ausgesetzten Seite gegenüberliegenden Seite der Brandschutzverglasung schlechter als bei erfindungsgemäßen Brandschutzverglasungen.

## Patentansprüche

1. Brandschutzmittel,
**dadurch gekennzeichnet,**
**dass** es mindestens ein intumeszierendes Material umfasst, wobei es ausgehend von einer Lösung, deren Gehalt an Glycerin unter 6 Gew.-% liegt, hergestellt wird.

2. Brandschutzmittel,
**dadurch gekennzeichnet,**
**dass** es als flächige Folie ausgebildet ist, deren durchschnittliche Dicke eine Toleranz zwischen 1 % und 30% aufweist.

3. Brandschutzmittel nach einem oder beiden der Ansprüche 1 oder 2,
**dadurch gekennzeichnet,**
**dass** es mindestens ein Wasserglas umfasst.

4. Brandschutzmittel nach einem oder mehreren der Ansprüche 1 bis 3,
**dadurch gekennzeichnet,**
**dass** es transparent ist.

5. Brandschutzmittel nach einem oder mehreren der Ansprüche 1 bis 4,
**dadurch gekennzeichnet,**
**dass** es ausgehend von einer Lösung, deren Gehalt an SiO₂ zwischen 10 Gew.-% und 60 Gew.-% liegt, hergestellt wird.

6. Brandschutzmittel nach einem oder mehreren der Ansprüche 1 bis 5,
**dadurch gekennzeichnet,**
**dass** es mindestens zwei alkalische Oxide umfasst.

7. Brandschutzmittel nach einem oder mehreren der Ansprüche 1 bis 6,
**dadurch gekennzeichnet,**
**dass** das/die alkalischen Oxid(e) aus K₂O, Li₂O und Na₂O ausgewählt wird/werden.

8. Brandschutzmittel nach einem oder mehreren der Ansprüche 1 bis 7,
**dadurch gekennzeichnet,**
**dass** das Verhältnis von SiO₂ zu Alk₂O zwischen 1:1 und 10:1 beträgt.

9. Brandschutzmittel nach einem oder mehreren der Ansprüche 1 bis 8,
**dadurch gekennzeichnet,**
**dass** es mindestens ein intumeszierendes Material umfasst, wobei es ausgehend von einer Lösung, deren Gehalt an Na₂O zwischen 1 Gew.-% und 20 Gew.-% liegt, hergestellt wird.

10. Brandschutzmittel nach einem oder mehreren der Ansprüche 1 bis 9,
**dadurch gekennzeichnet,**
**dass** das Verhältnis von Na₂O zu K₂O zwischen 1:1 und 20:1 beträgt.

11. Brandschutzmittel nach einem oder mehreren der Ansprüche 1 bis 10,
**dadurch gekennzeichnet,**
**dass** es einen Wassergehalt zwischen 10 Gew.-% und 40 Gew.-% aufweist.

12. Brandschutzmittel nach einem oder mehreren der Ansprüche 1 bis 11,
**dadurch gekennzeichnet,**
**dass** es mindestens ein Additiv umfasst.

13. Brandschutzmittel nach einem oder mehreren der Ansprüche 1 bis 12,
**dadurch gekennzeichnet,**
**dass** der Additivgehalt zwischen 0,0001 Gew.-% und 60 Gew.-% beträgt.

14. Brandschutzmittel nach Anspruch 13,
**dadurch gekennzeichnet,**
**dass** das Additiv / die Additive ausgewählt wird/werden aus:
Polyolen wie z. B. Ethylenglycol, Propan-1,3-diol, Butan-1,4-diol, Glycerin oder Sorbitol sowie insbesondere Polyglycerine,
Tensiden,
Polysäuren wie z. B. Adipinsäure, Apfelsäure, Weinsäure, Zitronensäure, Oxalsäure oder auch Borsäure,
flammenpyrolytisch hergestellten Pulvern oder entsprechenden Nanopartikeln wie z. B. Aluminium-, Calcium-, Magnesium-, Zirkon- oder Titanoxid,
Silane, Siloxane,
organischen Polymeren wie z. B. Polyvinylalkohol, Polyvinylamin, Polyvinylsulfonat, Polyacrylate, Polycarboxylate, Polyacrylamid oder Polydimethyldiallylammoniumchlorid
sowie deren monomere und oligomere Einheiten,
Copolymerisaten wie z. B. Styrol-Acrylat-Copolymere,
Schichtsilikaten wie z.B. Natrosilit (Na₂Si₂O₅), Makatit (Na₂Si₄O₈(OH)₂*4H₂O), Magadiit (Na₂Si₁₄O₂₉*11H₂O), Kenyait (Na₂Si₂₂O₄₅*10H₂O), Kanemit (NaHSi₂O₅*3H₂O), Revdit (Na₂Si₂O₅*5H₂O) und Grumantit (NaHSi₂O₅*0,9H₂O)
und Schichtkieselsäuren wie z. B solche der annähernden Formel H₂Si_{2y}O_{2y+1} (y=1,2,4,7,11) und/oder Nanokompositen wie z. B. organisch modifizierte
Schichtsilikate und Schichtkieselsäuren.

15. Brandschutzmittel nach einem oder mehreren der Ansprüche 1 bis 14,
**dadurch gekennzeichnet,**
**dass** es eine durchschnittliche Dicke von 0,1 bis 2 mm aufweist.

16. Brandschutzmittel nach einem oder mehreren der Ansprüche 1 bis 15,
**dadurch gekennzeichnet,**
**dass** es mindestens eine Folie umfasst.

17. Brandschutzmittel nach Anspruch 16,
**dadurch gekennzeichnet,**
**dass** das Material für die Folie ausgewählt wird aus:
Polyolefinen, Polyethylen und Polypropylen, Polyethylenterephthalat (PET), Polyestern, Teflon, Mischungen und/oder Copolymeren davon.

18. Brandschutzmittel nach einem oder mehreren der Ansprüche 1 bis 17,
**dadurch gekennzeichnet,**
**dass** es nach einem Verfahren hergestellt wurde, welches folgende Schritte enthält:
1. Beschichtung einer Folie mit einer Lösung, welche mindestens ein intumeszierendes Material enthält, so dass sich eine Schicht, welche gegebenenfalls mindestens ein intumeszierendes Material umfasst, bildet,
2. Trocknung der Folie und der Schicht.

19. Brandschutzmittel nach einem oder mehreren der Ansprüche 1 bis 18,
**dadurch gekennzeichnet,**
**dass** es nach einem Verfahren hergestellt wurde, bei dem die Beschichtung der Folie kontinuierlich erfolgt.

20. Brandschutzmittel nach einem oder mehreren der Ansprüche 1 bis 19,
**dadurch gekennzeichnet,**
**dass** die Schicht mit einer durchschnittlichen Dicke zwischen 0,1 mm und 2 mm auf die Folie aufgebracht wird.

21. Brandschutzmittel nach einem oder mehreren der Ansprüche 1 bis 20,
**dadurch gekennzeichnet,**
**dass** es nach einem Verfahren hergestellt wurde, bei dem die beschichtete Folie nach der Beschichtung kontinuierlich durch mindestens einen Trocknungsabschnitt transportiert wird.

22. Brandschutzmittel nach einem oder mehreren der Ansprüche 1 bis 21,
**dadurch gekennzeichnet,**
**dass** es nach einem Verfahren hergestellt wurde, bei dem die Trocknung in einer sauerstoffarmen Atmosphäre erfolgt.

23. Brandschutzmittel nach einem oder mehreren der Ansprüche 1 bis 22,
**dadurch gekennzeichnet,**
**dass** es nach einem Verfahren hergestellt wurde, bei dem die Trocknung in einer Atmosphäre erfolgt, welche weniger als 40 Gew.-% Sauerstoff, umfasst.

24. Brandschutzmittel nach einem oder mehreren der Ansprüche 1 bis 23,
**dadurch gekennzeichnet,**
**dass** es nach einem Verfahren hergestellt wurde, bei dem die Trocknung in einer Atmosphäre erfolgt, welche mehr als 50 Gew.-% eines inerten Gases umfasst.

25. Brandschutzmittel nach einem oder mehreren der Ansprüche 1 bis 24,
**dadurch gekennzeichnet,**
**dass** es nach einem Verfahren hergestellt wurde, bei dem das/die inerte(n) Gas(e) aus Argon und Stickstoff oder Mischungen davon ausgewählt wird.

26. Brandschutzmittel nach einem oder mehreren der Ansprüche 1 bis 25,
**dadurch gekennzeichnet,**
**dass** es nach einem Verfahren hergestellt wurde, bei dem die Trocknung bei einer Temperatur zwischen 35° C und 260 °C erfolgt.

27. Brandschutzmittel nach einem oder mehreren der Ansprüche 1 bis 26,
**dadurch gekennzeichnet,**
**dass** es nach einem Verfahren hergestellt wurde, bei dem die Trocknung bis zu einem Wassergehalt von zwischen 10 Gew.-% und 40 Gew.-% erfolgt.

28. Brandschutzmittel nach einem oder mehreren der Ansprüche 1 bis 27,
**dadurch gekennzeichnet,**
**dass** es nach einem Verfahren hergestellt wurde, bei dem die beschichtete Folie nach dem Trocknen aufgerollt wird.

29. Verwendung eines Brandschutzmittels zur Herstellung einer Brandschutzverglasung,
**dadurch gekennzeichnet,**
**dass** mindesten ein Brandschutzmittel nach einem oder mehreren der Ansprüche 1 bis 27 auf oder neben mindestens einer Glasscheibe angeordnet wird.
